# EUROPEAN PATENT SPECIFICATION

(11) **EP 3 806 066 B1**
(45) Date of publication and mention of the grant of the patent: **18.10.2023**
(21) Application number: 19814997.3
(22) Date of filing: 28.05.2019
(51) Int. Cl.: G08G 1/16, G05D 1/02, H04N 7/18

(54) **METHOD AND APPARATUS FOR CONTROLLING AUTOMATED GUIDED VEHICLES, AND STORAGE MEDIUM**
VERFAHREN UND VORRICHTUNG ZUR STEUERUNG AUTOMATISIERTER GEFÜHRTEN FAHRZEUGE UND SPEICHERMEDIUM
PROCÉDÉ ET APPAREIL DE COMMANDE DE VÉHICULES AUTOGUIDÉS ET SUPPORT DE STOCKAGE

(30) Priority: 06.06.2018 CN 201810575084
(43) Date of publication of application: 14.04.2021
(73) Proprietor: Hangzhou Hikrobot Co., Ltd., Hangzhou, Zhejiang (CN)
(72) Inventor: ZHU, Keping, Hangzhou, Zhejiang 310052 (CN)
(74) Representative: Yang, Shu
(86) International application number: PCT/CN2019/088809
(87) International publication number: WO 2019/233315

(56) References cited:
- WO-A1-2012/133359
- WO-A1-2016/033233
- CN-A- 103 935 365
- CN-A- 106 382 930
- CN-A- 106 527 426
- CN-A- 106 547 271
- US-A1- 2013 275 045
- US-A1- 2017 347 066
- US-A1- 2018 144 638

## Description

### TECHNICAL FIELD

The present disclosure relates to the field of electronic technology, and in particular to a method and an apparatus for controlling an automated guided vehicle and a storage medium thereof.

### BACKGROUND

An automated guided vehicle (AGV), also called unmanned conveying vehicle, refers to a transport vehicle that is equipped with an electromagnetic or optical automated guidance apparatus and the like, can travel along a prescribed guidance path, and has safety protection and various transport functions. Since the AGV has advantages of higher degree of automation and intelligence, the AGV is being used in more and more places, such as warehouses and logistic places, etc. In the use places of the AGV, mixed traffic of people and vehicles as well as mixed traffic of different types of vehicles is very common. Therefore, the AGV often has a collision accident during the movement, resulting in damage to the AGV or injury to people when the AGV collides with people. Therefore, in order to reduce the damage of the AGV and personnel injury, it is usually necessary to control the AGV during the movement thereof.

At present, a camera is usually installed on the AGV, and the visual data in a driving direction of the AGV can be collected through the camera installed on the AGV. A position of an obstacle can be determined when there is an obstacle in the driving direction of the AGV based on the visual data. Then, according to the position of the obstacle, the AGV is controlled to continue to move, stop moving or slow down to avoid the obstacle in the driving direction.

However, cargos are usually transported by the AGV, and the transported cargos may block the camera, so that whether there is an obstacle in the driving direction of the AGV cannot be determined, which leads to the occurrence of the collision accident and reduces control efficiency of the AGV.

US2013/275045 A1 discloses an article transport facility in which interference between an article transport vehicle and an interfering object is prevented. A position detector is provided on the ground side for detecting the position of an interfering object, and an external managing device issues a deceleration command to the article transport vehicle if the distance from the article transport vehicle to the interfering object becomes less than or equal to a predetermined low speed distance, based on position information for the interfering object and travel position information for the article transport vehicle. A vehicle side travel controller changes a target travel speed from a normal travel speed to a reduced travel speed which is lower, or less, than the normal travel speed while the target travel speed is set to the normal travel speed, if the deceleration command is issued from the external managing device. US2017/347066 A1 discloses a monitor apparatus includes a memory and processing circuitry. The processing circuitry acquires first information indicating a position and a moving direction of a target, acquires second information indicating a position of each of moving objects and sensors which are provided in the moving objects, selects at least one of a first moving object for monitoring the target from among the moving objects or a first sensor for monitoring the target from among the sensors, based on the first information and the second information, and transmits third information indicating the target and at least one of the first moving object or the first sensor.

### SUMMARY

The embodiments of the present disclosure provide a method and an apparatus for controlling an AGV and a storage medium thereof, which can be configured to solve the problems of low control efficiency of the AGV and the waste of operation resources of the scheduling device in related technologies. The technical solution is as follows:
In one aspect, a method for controlling a plurality of automated guided vehicles (AGV) is provided in accordance with independent claim 1.

Optionally, controlling AGVs currently in the working state comprises: controlling AGVs currently in the working state to forbid entering the visible area, when the moving object in the visible area comprises a non-AGV object and does not comprise an AGV; controlling the AGV currently in the working state to forbid entering the visible area comprises:
determining a distance between one of the AGVs currently driven to a public path area and the public path area, when the visible area is the public path area where the AGV and the non-AGV object are in mixed traffic; and
controlling an AGV of which a distance from the public path area is less than or equal to a safety distance to suspend driving until there is no non-AGV object in the public path area; and/or controlling a driving speed of the AGV of which the distance from the public path area is less than or equal to the safety distance to reduce to a reference speed until there is no non-AGV object in the public path area.

Optionally, controlling AGVs currently in the working state comprises: controlling AGVs currently in the working state to forbid entering the visible area, when the moving object in the visible area comprises a non-AGV object and does not comprise an AGV; controlling the AGVs currently in the working state to forbid entering the visible area comprises:
controlling one of the AGVs which is driven to a device maintenance area and of which a distance from the device maintenance area is less than or equal to a safety distance to forbid entering the device maintenance area, when the visible area is a device maintenance area included in the driving path of the AGV; and/or,
determining a stay time length of the non-AGV object in the device maintenance area, and controlling the AGV of which the driving path includes the device maintenance area to drive along an alternate path until there is no non-AGV object in the device maintenance area, when the stay time length of the non-AGV object in the device maintenance area is greater than or equal to a preset time length.

Optionally, after determining that there is a moving object in the visible area through detection, the method further includes:
controlling an indicator light in the visible area to be in a warning state to indicate that there is a moving object in the visible area.

Optionally, after determining that there is a moving object in the visible area through detection, the method further comprises:
controlling a voice output device in the visible area to play a first voice prompt message to prompt the non-AGV object in the visible area to leave the visible area, when the moving object in the visible area includes the non-AGV object; and
controlling the voice output device in the visible area to play a second voice prompt message to prompt the non-AGV object outside the visible area to forbid entering the visible area, when the moving object in the visible area includes the AGV and does not include the non-AGV object.

Optionally, after controlling the voice output device in the visible area to play the first voice prompt message, the method further comprises:
controlling the voice output device in the visible area to stop playing the first voice prompt message, when the visible area is the device maintenance area included in the driving path of the AGV, and the stay time length of the non-AGV object in the device maintenance area is greater than the preset time length.

Optionally, after detecting a moving object in the visible area of the target camera based on the visual data, the method further comprises:
controlling the AGV currently in the working state to drive according to the preset driving path, when determining that there is no moving object in the visible area through detection.

Optionally, after determining that there is no moving object in the visible area through detection, the method further includes:
controlling the indicator light in the visible area to be in a passing state to indicate that there is no moving object in the visible area.

In another aspect, an apparatus for controlling a plurality of AGVs is provided in accordance with independent claim 9.

Optionally, the first controlling module further comprises: a first controlling sub-module configured to control AGVs currently in the working state to forbid entering the visible area, when the moving object in the visible area comprises a non-AGV object and does not comprise an AGV; and the first controlling sub-module is configured to:
determine a distance between one of the AGVs currently driven to a public path area and the public path area, when the visible area is the public path area where the AGV and the non-AGV object are in mixed traffic; and
control an AGV of which a distance from the public path area is less than or equal to a safety distance to suspend driving until there is no non-AGV object in the public path area; and/or control a driving speed of the AGV of which the distance from the public path area is less than or equal to the safety distance to reduce to a reference speed until there is no non-AGV object in the public path area; wherein the first controlling sub-module (5031) is further configured to: control one of the AGVs which is driven to a device maintenance area and of which a distance from the device maintenance area is less than or equal to a safety distance to forbid entering the device maintenance area, when the visible area is the device maintenance area comprised in the driving path of the AGV; and/or, determine a stay time length of the non-AGV object in the device maintenance area, and control the AGV of which the driving path comprises the device maintenance area to drive along an alternate path until there is no non-AGV object in the device maintenance area, when the stay time length of the non-AGV object in the device maintenance area is greater than or equal to a preset time length;
the apparatus further comprises:
   a second controlling module configured to control an indicator light in the visible area to be in a warning state to indicate that there is a moving object in the visible area;
the apparatus further comprises:
   a third controlling module configured to control a voice output device in the visible area to play a first voice prompt message to prompt the non-AGV object in the visible area to leave the visible area, when the moving object in the visible area includes the non-AGV object; and
   a fourth controlling module configured to control the voice output device in the visible area to play a second voice prompt message to prompt the non-AGV object outside the visible area to forbid entering the visible area, when the moving object in the visible area includes the AGV and does not include the non-AGV object;
the apparatus further comprises:
   a fifth controlling module configured to control the voice output device in the visible area to stop playing the first voice prompt message, when the visible area is the device maintenance area included in the driving path of the AGV, and the stay time length of the non-AGV object in the device maintenance area is greater than the preset time length;
the apparatus further comprsies:
   a sixth controlling module configured to control the AGV currently in the working state to drive according to the preset driving path, when determining that there is no moving object in the visible area through detection; and
the apparatus further comprises:
   a seventh controlling module configured to control the indicator light in the visible area to be in a passing state to indicate that there is no moving object in the visible area.

In another aspect, a system for controlling a plurality of AGVs is provided in accordance with independent claim 11.

In another aspect, a computer-readable storage medium storing a computer program therein, wherein the computer program, when executed by a processor, implements the steps of the method of the above aspect, is provided in accordance with independent claim 12.

The beneficial effects brought by the technical solutions provided by the embodiments of the present disclosure at least include the followings.

In the embodiments of the present disclosure, when the moving object is detected in the visible area of the target camera, the AGV currently in the working state is controlled. The visible area of the target camera is a range in which the target camera collects the visual data of a traffic management area on the driving path of the AGV, which means that the target camera is not a camera installed on the AGV in the working state in the workplace, thereby reducing the possibility that the camera of the AGV is blocked and cannot collect the visual data, ensuring the control of the AGV that requires traffic management and reducing the occurrence of a collision accident of the AGV. In addition, since the visual data collected by each AGV are the visual data in its current driving direction in related technologies, the scheduling device can perform independent control based on the visual data of each AGV. Based on the visual data of one AGV, the control of other AGVs cannot be achieved, so that the operation resources of the scheduling device are wasted. In the embodiment of the present disclosure, the camera disposed in the workplace collects the visual data from the traffic management area on the driving path of the AGV, and the AGV in the workplace can appear in the visible area of the camera, so that the scheduling device can perform unified control on the AGVs in the working state in the workplace based on the visual data collected by the camera disposed in the workplace, thereby improving the control efficiency of the scheduling device and saving the operation resources of the scheduling device.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is an architecture schematic diagram of a system for controlling an AGV according to an exemplary embodiment of the present disclosure;
FIG. 2 is a schematic diagram of a visible area of a camera according to an exemplary embodiment of the present disclosure;
FIG. 3 is a flowchart of a method for controlling an AGV according to an exemplary embodiment of the present disclosure;
FIG. 4 is a flowchart of another method for controlling an AGV according to another exemplary embodiment of the present disclosure;
FIG. 5 is a schematic structural diagram of an apparatus for controlling an AGV according to an exemplary embodiment of the present disclosure;
FIG. 6 is a schematic structural diagram of a first controlling module according to an exemplary embodiment of the present disclosure;
FIG. 7 is a schematic structural diagram of another apparatus for controlling an AGV according to another exemplary embodiment of the present disclosure;
FIG. 8 is a schematic structural diagram of another apparatus for controlling an AGV according to another exemplary embodiment of the present disclosure;
FIG. 9 is a schematic structural diagram of another apparatus for controlling an AGV according to another exemplary embodiment of the present disclosure;
FIG. 10 is a schematic structural diagram of another apparatus for controlling an AGV according to another exemplary embodiment of the present disclosure;
FIG. 11 is a schematic structural diagram of another apparatus for controlling an AGV according to another exemplary embodiment of the present disclosure;
FIG. 12 is a schematic structural diagram of a scheduling device according to an exemplary embodiment of the present disclosure; and
FIG. 13 is a schematic structural diagram of another scheduling device according to an exemplary embodiment of the present disclosure.

### DETAILED DESCRIPTION

The present disclosure will be described in further detail with reference to the accompanying drawings, to present the objects, technical solutions, and advantages of the present disclosure more clearly.

Before explaining the embodiments of the present disclosure in detail, an application scenario and a system architecture which are involved in the embodiments of the present disclosure are respectively explained and described at first.

Firstly, the application scenario involved in the embodiments of the present disclosure is introduced.

At present, in order to reduce the collision of the AGV during the movement, the visual data in a driving direction of the AGV may be collected through a camera installed on the AGV, and a position of an obstacle may be determined when there is an obstacle in the driving direction of the AGV based on the visual data. Then, according to the position of the obstacle, the AGV is controlled to continue to move, stop moving or slow down to avoid the obstacle in the driving direction. However, the camera of the AGV may be blocked, sometimes other scheduling devices may be configured to control the AGV, and when there are multiple AGVs in a use place of the AGV, each AGV will collect the visual data. As a result, other scheduling devices need to process a large amount of visual data, which consumes operation resources and reduces the control efficiency of the AGV.

Based on such a scenario, the embodiment of the present disclosure provides a method for controlling an AGV, which improves the control efficiency of the AGV and reduces the occurrence of the collision accident of the AGV.

Next, the system architecture involved in the embodiments of the present disclosure will be introduced.

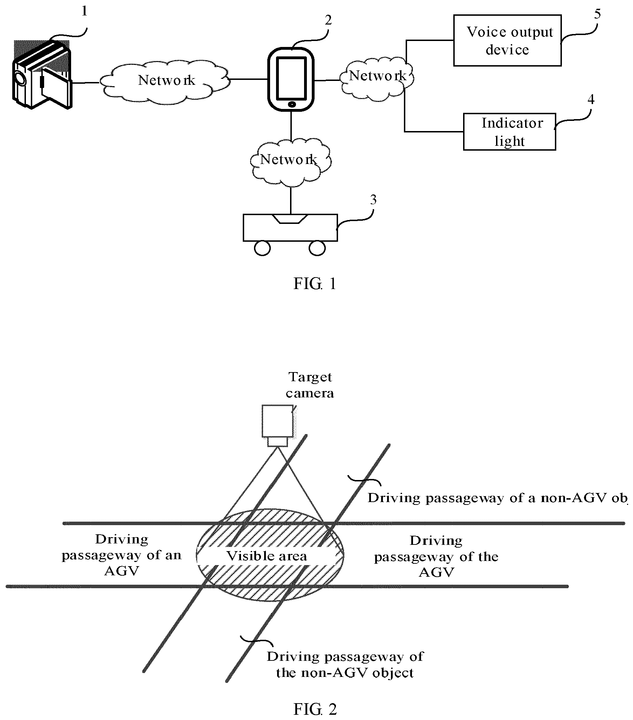

FIG. 1 is an architecture schematic diagram of a system for controlling an AGV according to an embodiment of the present disclosure. Referring to FIG. 1, the system includes multiple cameras 1, a scheduling device 2, and multiple AGVs 3. The multiple cameras 1 may be connected to the scheduling device 2 through a network, and the multiple AGVs 3 may also be connected to the scheduling device 2 through the network. The scheduling device 2 may be a terminal or a server. For ease of description, only one camera 1, one AGV 3, and the scheduling device 2 being a terminal are used as an example for description in the accompanying drawings of the present disclosure. The camera 1 is configured to collect the visual data of a traffic management area on the driving path of the AGV 3 in a visible area, and the visual data may be video data or image data. The scheduling device 2 is configured to control the AGV 3 in a workplace to work. Optionally, the scheduling device 2 is also configured to control the camera 1 to collect the visual data. The AGV 3 is configured for carrying a cargo and other operations in the workplace. In some embodiments, the camera 1 may collect the visual data in the visible area and send the visual data to the scheduling device 2. The scheduling device 2 may receive the visual data sent by the camera 1, and detect a moving object in the visible area of the camera 1 based on the visual data. When the moving object is detected in the visible area, the AGV currently in a working state is controlled to avoid the collision accident of the AGV.

In addition, in the embodiment of the present disclosure, the system for controlling an AGV may not only include multiple cameras 1, the scheduling device 2, and multiple AGVs 3, but also may include other devices. For example, referring to FIG. 1, the system may also include multiple indicator lights 4 and multiple voice output devices 5. For ease of description, only one indicator light 4 and one voice output device 5 are used as an example for description in the accompanying drawings of the present disclosure. At least one indicator light 4 and one voice output device 5 may be installed in each visible area, and both the indicator light 4 and the voice output device 5 may be connected to the scheduling device 2 through the network. The indicator light 4 is configured to be turned on or off under the control of the scheduling device 2, and the voice output device 5 is configured to output various prompt messages for prompting the staff under the control of the scheduling device 2.

It should be noted that, under normal circumstances, the camera 1 has a largest shooting range, that is, the visible area of the camera 1. In the workplace, in order to avoid the collisions between the AGV and a non-AGV object, a driving passageway of the AGV and a driving passageway of the non-AGV object are usually separated, but sometimes the driving passageway of the AGV and the driving passageway of the non-AGV object intersect unavoidably. Therefore, the camera 1 may be installed at the intersection of the driving passageway of the AGV and the driving passageway of the non-AGV object. The visible area of the camera 1 is a largest area shot at the intersection of the driving passageway of the AGV and the driving passageway of the non-AGV object, referring to FIG. 2.

After the application scenario and system architecture of the embodiments of the present disclosure are introduced, a method for controlling an AGV according to the embodiment of the present disclosure will be described in detail below in conjunction with the accompanying drawings.

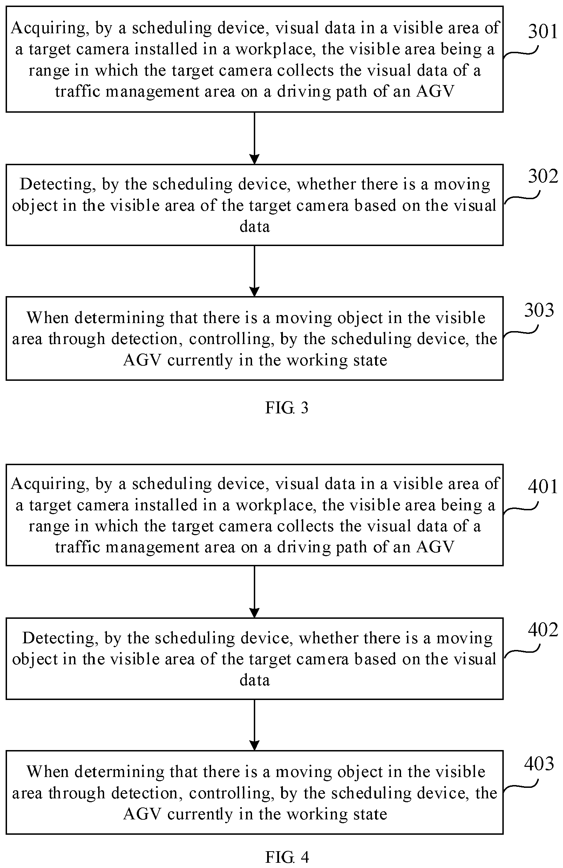

FIG. 3 is a flowchart of a method for controlling an AGV according to an embodiment of the present disclosure. Referring to FIG. 3, the method includes the following steps.

In 301, a scheduling device acquires visual data in a visible area of a target camera disposed in the workplace. The visible area is a range in which the target camera collects the visual data of a traffic management area on a driving path of the AGV.

Under normal circumstances, in order to monitor the staff and various machines in the workplace to avoid work accidents and other situations, usually multiple cameras may be disposed in the workplace, and the multiple cameras may collect the visual data of the corresponding visual areas, and send the collected visual data to the scheduling device. In addition, the AGV is used in the workplace, and the AGV may have a collision accident in an area where the non-AGV object appears. In order to avoid the collision accident, a traffic management for the AGV is usually required at the area. Therefore, any one of the multiple cameras disposed in the workplace may collect the visual data of the traffic management area on the driving path of the AGV according to the largest shooting range, and the target camera may be any one of the multiple cameras. That is, the target camera may collect the visual data of the visible area, and send the visual data of the visible area to the scheduling device, so that the scheduling device may acquire visual data in the visible area collected by the target camera.

The target camera may collect the visual data of the visible area in real time and send the visual data to the scheduling device. Of course, since the staff has fixed working hours, when there is no staff in the workplace, a probability of the collision accident of the AGV is reduced. Therefore, when there is no staff in the workplace, the target camera may not collect the visual data, that is, the target camera may collect the visual data in the visible area during a designated time period, and the designated time period may be set in advance. Besides, the designated time period may be a time period during which the staff in the workplace works. For example, the designated time period may be 8 am to 8 pm and so on. In addition, it is impossible drive the AGV around the clock, when there is no moving of the AGV in the workplace, there will be no collision accident of the AGV, and then there may be no need to collect the visual data at this time. From the above, it can be known that the scheduling device may also control the camera to collect the visual data in the visible area. Therefore, the scheduling device may control the target camera to stop collecting the visual data of the visible area when it is determined that there is no moving of the AGV in the workplace.

The scheduling device is configured to control the AGV, and the scheduling device may acquire an operating state of each AGV. Therefore, the scheduling device may determine whether each AGV is in a moving state according to the operating state of each AGV. When it is detected that no AGV is in a moving state, it can be determined that no AGV moves in the workplace.

In 302, the scheduling device detects whether there is a moving object in the visible area of the target camera based on the visual data.

It can be seen from the above that there may be an intersection between the driving passageway of the AGV and the driving passageway of the non-AGV object. The probability of collision between the AGV and the non-AGV object at the intersection of the driving passageway is higher, and the camera is usually installed at the intersection of the driving passageways. Therefore, in order to avoid the collision accidents between the AGV and other non-AGV objects, the scheduling device may detect whether there is the moving object in the visible area of the target camera based on the visual data. The visual data may be video data or image data. No matter it is video data or image data, the detection may be performed based on image detection when the scheduling device detects the moving object in the visible area. Therefore, when the visual data is video data, the operation that the scheduling device detects whether there is the moving object in the visible area of the target camera based on the visual data may include: an image detection on each frame of visual image in the visual data is performed. When an object different from that in the previous frame of visual image appears in the visual image, it is determined that there is a moving object in the visual area. When an object appearing in the visual image and the object in the previous frame of visual image are the same but have different positions, it is determined that there is a moving object in the visual area. When an object different from that in the previous frame of visual image does not appear in the visual image, and the object in the visual image and the object in the previous frame of visual image are the same and also have the same position, it is determined that there is no moving object in the visible area.

Similarly, when the visual data are image data, the visual data of the visual area acquired by the scheduling device may be multiple scene images of the visible area, and the scheduling device may perform an image detection on each scene image. When an object different from that in the previous scene image appears in one of the scene images, it is determined that there is a moving object in the visible area. When an object that appears in the scene image and an object that appears in the previous scene image are the same but have different positions, it is determined that there is a moving object in the visible area. When an object different from that in the previous scene image does not appear in the scene image, and an object in the scene image and an object in the previous scene image are the same and also have the same position, it is determined that there is no moving object in the visible area.

In 303, when determining that there is a moving object in the visible area through detection, the scheduling device controls the AGV currently in a working state.

Since the visible area is at the intersection of the driving passageway of the AGV and the driving passageway of the non-AGV object, various objects may enter and exit the visible area. When the AGV and other non-AGV objects enter the visible area, the collision accident may occur. Therefore, in order to avoid the collision accident, when determining that there is a moving object in the visible area through detection, the scheduling device may control the AGV currently in the working state.

In the embodiment of the present disclosure, when detecting that there is a moving object in the visible area of the target camera, the scheduling device may control the AGV currently in the working state. The target camera is a camera disposed in the workplace instead of a camera installed on the AGV in the working state in the workplace, so that the possibility that the camera of the AGV is blocked and cannot collect the visual data is reduced, the management of the AGV that requires traffic management is ensured, and the occurrence of the collision accident of the AGV is reduced. In addition, since the visual data collected by each AGV is the visual data in its current driving direction in related technologies, the scheduling device can perform independent control based on the visual data of each AGV. Since other AGVs cannot be controlled based on the visual data of one AGV, the operation resources of the scheduling device are consumed. In the embodiment of the present disclosure, the camera disposed in the workplace collects the visual data from the traffic management area on the driving path of the AGV, and the AGV in the workplace may appear in the visible area of the camera, so that the scheduling device performs unified control on the AGVs in the working state in the workplace based on the visual data, thereby improving the control efficiency of the scheduling device and saving the operation resources of the scheduling device.

FIG. 4 is a flowchart of a method for controlling an AGV according to an embodiment of the present disclosure. The embodiment of the present disclosure will explain the embodiment shown in FIG. 3 above in detail with reference to FIG. 4. Referring to FIG. 4, the method specifically includes the following steps.

In 401, the scheduling device acquires visual data in the visible area of the target camera disposed in the workplace, and the visible area is a range in which the target camera collects the visual data from the traffic management area on the driving path of the AGV.

The operation that the scheduling device acquires visual data in the visible area of the target camera disposed in the workplace may refer to the operation of the above step 301, which is not repeated by the embodiment of the present disclosure in detail.

It should be noted that the number of the cameras disposed in the workplace is less than the number of the AGVs in the workplace.

It should be noted that in the related technologies, the visual data may be acquired through the camera installed on the AGV, and then the scheduling device may determine whether there is an obstacle in the driving direction of the AGV based on the visual data collected by each AGV. When there are multiple AGVs in the workplace, each AGV will collect the visual data, so that the scheduling device needs to process a large amount of visual data. However, in the embodiment of the present disclosure, the number of the cameras disposed in the workplace is less than the number of the AGVs in the workplace, which means that the number of the cameras disposed in the workplace is less than the number of cameras installed on the AGV, so that the quantity of the visual data processed by the scheduling device is reduced. In addition, in the related technologies, since the visual data collected by each AGV is the visual data in its current driving direction, the scheduling device may perform independent control based on the visual data of each AGV. Other AGVs cannot be controlled based on the visual data of one AGV, so that the operation resources of the scheduling device are consumed. However, in the embodiment of the present disclosure, the camera disposed in the workplace collects the visual data from the traffic management area on the driving path of the AGV, and the AGV in the workplace may appear in the visible area of the camera, so that the scheduling device controls the AGV in the working state in the workplace based on the visual data, thereby improving the control efficiency of the scheduling device, and saving the operation resources of the scheduling device.

In 402, the scheduling device detects whether there is a moving object in the visible area of the target camera based on the visual data.

The operation that the scheduling device detects whether there is a moving object in the visible area of the target camera based on the visual data may refer to the operation of the above step 302, which will not be repeated by the embodiment of the present disclosure in detail.

It should be noted that based on the visual data, the scheduling device may detect that there is a moving object in the visible area of the target camera, or may detect that there is no moving object in the visible area. Based different detection results, the operations performed by the scheduling device are also different.

The AGV is a robot navigated and driven autonomously, and the driving path is usually set for each AGV in advance. Therefore, when determining that there is no moving object in the visible area through detection, the scheduling device may control the AGV currently in the working state to drive according to a preset driving path.

In addition, when there is no moving object in the visible area, it means that any object may pass through the visible area, for example the staff in the workplace. Therefore, in order to enable the staff to clearly know whether they are allowed to pass the visible area, after determining that there is no moving object in the visible area through detection, the scheduling device may also control an indicator light in the visible area to be in a passing state, thereby indicating that there is no moving object in the visible area.

It should be noted that the passing state of the indicator light may be reflected by a lighting color, a lighting manner and the like of the indicator light. For example, when the lighting color of the indicator light is green, it is determined that the indicator light is in the passing state, and/or, when the lighting manner of the indicator light is always on without flashing, it is determined that the indicator light is in the passing state.

It should be noted that the visual data acquired by the scheduling device are collected by the camera disposed in the workplace and are not acquired from the camera installed on the AGV in the working state in the workplace, and the number of the cameras installed in the workplace is generally less than the number of the AGVs in the working state in the workplace, so that the quantity of the visual data processed by the scheduling device is reduced, and the operation resources of the scheduling device are saved.

Furthermore, since the scheduling device may also detect that there is a moving object in the visible area, when the scheduling device determines that there is a moving object in the visible area through detection, the operation of the scheduling device may refer to the operation of the following step 403.

In 403, when determining that there is a moving object in the visible area through detection, the scheduling device controls the AGV currently in the working state.

It can be seen from the above step 303 that, in order to avoid the collision accident, when determining that there is a moving object in the visible area through detection, the scheduling device may control the AGV currently in the working state. The AGV can move, and the non-AGV object such as the staff or a carrier also moves. The moving object in the visible area may include the non-AGV object and not include the AGV, and/or, include the AGV and not include the non-AGV object, and/or, include the AGV and the non-AGV object. According to the different types of objects included in the moving objects in the visible area, the operation that the scheduling device controls the AGV is also different. Therefore, the operation that the scheduling device controls the AGV currently in the working state may be: when the moving object in the visible area includes the non-AGV object and does not include the AGV, the AGV currently in the working state is controlled to forbid entering the visible area; and/or, when the moving object in the visible area includes the AGV and does not include the non-AGV object, the AGV currently in the working state is controlled to drive according to the preset driving path; and/or, when the moving object in the visible area includes the AGV and the non-AGV object, the AGV currently in the working state and located outside the visible area is controlled to forbid entering the visible area, and the AGV currently in the working state and located in the visible area is controlled to stop moving.

When the moving object in the visible area includes the non-AGV object and does not include the AGV, in order to prevent subsequent AGVs from entering the visible area and colliding with the non-AGV object, the scheduling device may control the AGV currently in the working state to forbid entering such visible area. When the moving object in the visible area includes the AGV and does not include the non-AGV object, the AGV can move according to the preset path, so that there will be no collision between the AGVs. Therefore, the scheduling device may control the AGV currently in the working state to move normally, that is, the scheduling device controls the AGV currently in the working state to drive according to the preset driving path. When the moving object in the visible area includes the AGV and the non-AGV object, it means that the probability of collision between the AGV and the non-AGV object in the visible area is very high. Therefore, in order to avoid the collision between the AGV and the non-AGV object, the scheduling device may control the AGV currently in the working state and located in the visible area to stop moving. Meanwhile, in order to prevent the subsequent AGVs from entering the visible area in this case, the scheduling device may control the AGV currently in the working state and located outside the visible area to forbid entering the visible area.

The operation that the scheduling device controls the AGV currently in the working state to forbid entering the visible area, and the operation that the scheduling device controls the AGV currently in the working state and located outside the visible area to forbid entering the visible area and controls the AGV currently in the working state and located in the visible area to stop moving are respectively explained as follows.

The following describes how the scheduling device controls the AGV currently in the working state to forbid entering the visible area.

The traffic management area on the driving path of the AGV may be a public path area where the AGV and the non-AGV object are in mixed traffic, or a device maintenance area of the driving path of the AGV. That is, the visible area of the target camera may be the public path area where the AGV and non-AGV object are in the mixed traffic, or may be the device maintenance area included in the driving path of the AGV. According to the different scenes of the visible area, the case that the scheduling device controls the AGV currently in the working state to forbid entering the visible area at least includes one of the following two cases.

In the first case, when the visible area is the public path area where the AGV and the non-AGV object are in mixed traffic, a distance between the AGV currently driven to the public path area and the public path area is determined. The AGV of which the distance from the public path area is less than or equal to a safety distance is controlled to suspend driving until there is no non-AGV object in the public path area; and/or, a driving speed of the AGV of which the distance from the public path area is less than or equal to the safety distance is controlled to reduce to a reference speed until there is no non-AGV object in the public path area.

When the moving object in the visible area includes the non-AGV object, the AGV farther away from the visible area will not collide in the visible area during driving. Therefore, the scheduling device does not need to control the AGV farther away from the visible area to forbid entering the visible area, and only needs to control the AGV closer to the visible area to forbid entering the visible area.

It should be noted that the safety distance is a distance which ensures that the non-AGV object will not be collided in the public path area during the driving to the public path area at the driving speed of the AGV. The safety distance may be set in advance, for example, the safety distance may be 10m, 20m, etc. Of course, since the driving speed of AGV is usually fixed, in order to ensure a control accuracy, the safety distance may also be determined in real time. For example, a driving speed of the non-AGV object in the public path area may be detected by a speed sensor installed in the public path area to determine the time length that the non-AGV object leaves the public path area at the current driving speed. Such time length is multiplied by the driving speed of the AGV to acquire a distance, which is determined as the safety distance.

It should also be noted that the public path area may be an intersection area where the AGV and the non-AGV object are in the mixed traffic, or may be a public path area outside the intersection area when the AGV and the non-AGV object are driven. The reference speed may be set in advance, for example, the reference speed may be 1/2, 1/3, 1/4, etc., of the normal driving speed of the AGV.

In addition, in order to accurately determine the distance between the AGV currently driven to the public path area and the public path area, and to control the AGV of which the distance from the public path area is less than or equal to the safety distance to forbid entering the public path area, the scheduling device may acquire position information of the AGV currently in the working state. An identifier of the AGV currently driven to the public path area and the distance between each AGV and the public path area are determined based on the acquired position information. Then based on the identifier of the AGV currently driven to the public path area, the AGV of which the distance from the public path area that is less than or equal to the safety distance is controlled to suspend driving.

In the second case, when the visible area is the device maintenance area included in the driving path of the AGV, the AGV which is driven to the device maintenance area and of which the distance from the device maintenance area is less than or equal to the safety distance is controlled to forbid entering the device maintenance area; and/or, the stay time length of the non-AGV object in the device maintenance area is determined, and when the stay time length of the non-AGV object in the device maintenance area is greater than or equal to a preset time length, the AGV of which the driving path includes the device maintenance area is controlled to drive according to an alternate path until there is no non-AGV object in the device maintenance area.

Sometimes a device near the driving path of the AGV may fail, at this time, maintenance personnel are required to perform repairing. When the maintenance personnel repair the faulty device, if the AGV passes through the device maintenance area, and the maintenance personnel do not notice the driving AGV, the maintenance personnel may collide with the AGV entering the device maintenance area. Therefore, it is necessary to control the AGV in the working state to forbid entering the device maintenance area. Besides, not all the driving paths of the AGVs pass through the device maintenance area, there is no need for the scheduling device to control all the AGVs in the working state to forbid entering the device maintenance area, and the scheduling device needs to control the AGV which is driven to the device maintenance area and of which the distance from the device maintenance area is less than or equal to the safety distance to forbid entering the device maintenance area.

The scheduling device may control the AGV which is driven to the device maintenance area and of which the distance from the device maintenance area is less than or equal to the safety distance to suspend driving, and/or, control the driving speed of the AGV which is driven to the device maintenance area and of which the distance from the device maintenance area is less than or equal to the safety distance to reduce to the reference speed, so that the AGV which is driven to the device maintenance area and of which the distance from the device maintenance area is less than or equal to the safety distance is controlled to forbid entering the device maintenance area.

In addition, the time required for the maintenance personnel to repair the device is sometimes long and sometimes short, when the time for device maintenance is longer, the suspension of the AGV will reduce the efficiency of the AGV, and after the speed of the AGV is slowed down to the reference speed, there is still a possibility that the AGV is driven into the device maintenance area to cause a collision accident of the AGV. Therefore, in order not to affect the working efficiency of the AGV and avoid the occurrence of the collision accident of the AGV, the scheduling device may determine the stay time length of the non-AGV object in the device maintenance area. When the stay time length of the non-AGV object in the device maintenance area is greater than or equal to the preset time length, the AGV of which the driving path includes the device maintenance area is controlled to drive according to an alternate path until there is no non-AGV object in the device maintenance area.

It should be noted that the preset time length may be set in advance. For example, the preset time length may be 2min, 3min, 5min, and so on. The alternate path may be a path for other AGVs or non-AGV objects to pass through, or may be a preset path special for emergency.

The following explains how the scheduling device controls the AGV currently in the working state and located outside the visible area to forbid entering the visible area, and controls the AGV currently in the working state and located in the visible area to stop moving.

When the scheduling device controls the AGV currently in the working state and located outside the visible area to forbid entering the visible area, and controls the AGV currently in the working state and located in the visible area to stop moving, it should be clearly determined that which AGVs need to be controlled to stop moving and which AGVs need to be forbidden to enter the visible area. Therefore, the manner in which the scheduling device controls the AGV currently in the working state and located outside the visible area to forbid entering the visible area, and controls the AGV currently in the working state and located in the visible area to stop moving at least may include at least one of the two following manners.

In the first manner, the scheduling device acquires the position information of the AGV currently in the working state. Based on the acquired position information, the identifier of the AGV located outside the visible area and the identifier of the AGV located in the visible area are determined. Based on the determined identifiers, the AGV located outside the visible area is controlled to forbid entering the visible area, and the AGV located in the visible area is controlled to stop moving.

Since the scheduling device may store a map of a current workplace, the scheduling device determines the position information of the visible area on the map. Meanwhile, the AGV may perform positioning during the movement and send the positioning information to the scheduling device. Therefore, the scheduling device may determine the position information of the AGV in the working state on the map.

It should be noted that the identifier of the AGV is configured to uniquely identify the corresponding AGV, and the identifier of the AGV may be a media access control (MAC) address of the AGV, a factory serial number, and so on.

It should be noted that when the scheduling device determines the identifier of the AGV in the first manner, each AGV may send the position information to the scheduling device, so that the scheduling device can accurately determine the AGVs which need to be controlled when it determines the position of each AGV, thereby improving the acquiring accuracy of the identifier of the AGV and the control accuracy and efficiency of the AGV.

In the second manner, each AGV may be posted with own identifier information. The scheduling device may recognize the identifier of the AGV located in the visible area through the visual data. Based on the recognized identifier, the AGV located in the visible area is controlled to stop moving, and the remaining AGVs in the working state are controlled to forbid entering the visible area.

It should be noted that the identifier information posted to the AGV may be any information that can distinguish each AGV, such as a digital number, a color, and a graphic code.

It should be noted that when the scheduling device determines the identifier of the AGV in the second manner, the scheduling device may directly recognize the identifier of the AGV located in the visible area through the visual data, and there is no need to acquire additional information, thereby improving the acquiring convenience of the identifier of the AGV.

In addition, the AGV is usually configured for carrying a cargo. Therefore, the identifier information posted on the AGV may be blocked by cargos, and the scheduling device is caused to be unable to acquire the identifier of the AGV. Therefore, in order to ensure accurate control of the AGV in the working state, usually the identifier of the AGV may be acquired through the first manner mentioned above.

Furthermore, the operation that the scheduling device controls the AGV located outside the visible area to forbid entering the visible area based on the determined identifier may refer to the above operation of controlling the AGV in the working state to forbid entering the visible area in a case where the moving object in the visible area includes the non-AGV object and does not include the AGV.

Further, when there is a moving object in the visible area, if the staff enter the visible area rashly at this time, the staff may be injured. Therefore, in order to reduce the injury of the staff, after determining that there is a moving object in the visible area through detection, the scheduling device may also control the indicator light in the visible area to be in a warning state to indicate that there is a moving object in the visible area.

It should be noted that the indicator light in the warning state may also be reflected by a lighting color, a lighting manner and the like of the indicator light. For example, when the lighting color of the indicator light is red, it is determined that the indicator light is in the warning state, and/or when the indicator light flashes regularly, it is determined the indicator light is in the warning state.

In addition, sometimes the staff may not notice the state of the indicator light in the visible area due to busy work at hand, thereby causing the indicator light to fail for the purpose of prompting, and the possibility of the collision accident is still very high. Therefore, in order to improve the effect of prompting the staff and reduce the possibility of the collision accident, the scheduling device not only can indicate the existence of the moving object in the visible area by controlling the indicator light, but also can prompt in other manners. For example, when the moving object in the visible area includes the non-AGV object, a voice output device in the visible area is controlled to play a first voice prompt message to prompt the non-AGV object in the visible area to leave the visible area. When the moving object in the visible area includes the AGV and does not include the non-AGV object, the voice output device in the visible area is controlled to play a second voice prompt message to prompt the non-AGV object outside the visible area to forbid entering the visible area.

Since the visible area is at the intersection of the driving passageway of the AGV and the driving passageway of the non-AGV object, the driving path of the AGV needs to pass through the visible area. If the AGV is forbidden to enter the visible area for a long time, it may affect the cargo carrying of the AGV. Therefore, when the moving object in the visible area includes the non-AGV object, in order to avoid the effect on cargo carrying of the AGV, it is usually necessary to prompt the non-AGV object in the visible area to leave as soon as possible. When the moving object in the visible area includes the AGV and does not include the non-AGV object, if the non-AGV object enters the visible area at this time, the non-AGV object may collide with the AGV. Therefore, in order to avoid the collision with the AGV, at this point, it may prompt that the non-AGV object outside the visible area is forbidden to enter the visible area.

Furthermore, when the visible area is the device maintenance area, since the device maintenance area is an area where the device is repaired, if the device maintenance consumes a longer time, the device maintenance personnel will stay in the device maintenance area for a long time. At this point, it is not only meaningless to continuously play the first voice prompt message, but also wastes resources. Therefore, when the visible area is the device maintenance area included in the driving path of the AGV, and the stay time length of the non-AGV object in the device maintenance area is greater than the preset time length, the voice output device in the visible area is controlled to stop playing the first voice prompt message.

In the embodiment of the present disclosure, the scheduling device may acquire visual data in the visible area collected by the target camera, and control the AGV currently in the working state when detecting that there is a moving object in the visible area of the target camera based on the visual data. Since the visible area of the target camera is a range where the target camera collects the visual data from the traffic management area on the driving path of the AGV, which means that the target camera is not a camera installed on the AGV in the working state in the workplace, thereby reducing the possibility that the visual data cannot be collected due to the blocking to the camera of the AGV, ensuring the management of the AGV that requires traffic management and reducing the occurrence of the collision accident of the AGV. In addition, the number of the cameras disposed in the workplace is less than the number of the AGVs in the workplace, and all AGVs may be provided with the cameras, which means that the number of the cameras disposed in the workplace is less than the number of the cameras installed on the AGV, so that the quantity of the processed visual data is reduced, and operation resources are saved.

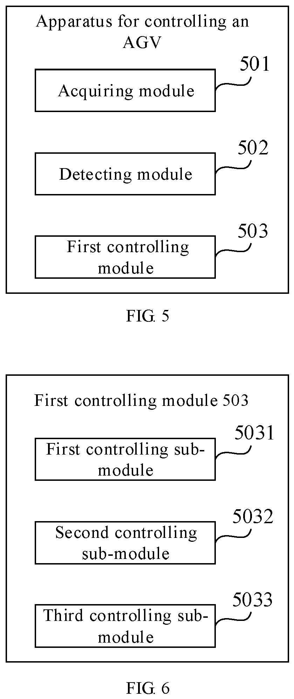

FIG. 5 is a block diagram of an apparatus for controlling an AGV according to an embodiment of the present disclosure. Referring to FIG. 5, the apparatus may be implemented by software, hardware or a combination of the two. The apparatus includes: an acquiring module 501, a detecting module 502 and a first controlling module 503.

The acquiring module 501 is configured to acquire visual data in a visible area of a target camera installed in a workplace, wherein the visible area is a range in which the target camera collects visual data of a traffic management area on a driving path of the AGV;
the detecting module 502 is configured to detect whether this is a moving object in the visible area of the target camera based on the visual data; and
the first controlling module 503 is configured to control the AGV currently in the working state when determining that there is a moving object in the visible area through detection.

Optionally, referring to FIG. 6, the first controlling module 503 includes:
a first controlling sub-module 5031 configured to control the AGV currently in a working state to forbid entering the visible area when the moving object in the visible area includes the non-AGV object and does not include the AGV; and/or,
a second controlling sub-module 5032 configured to control the AGV currently in the working state to drive according to a preset driving path when the moving object in the visible area includes the AGV and does not include the non-AGV object; and/or,
a third controlling sub-module 5033 configured to control the AGV currently in the working state and located outside the visible area to forbid entering the visible area when the moving object in the visible area includes the AGV and the non-AGV object, and control the AGV currently in the working state and located in the visible area to stop moving.

Optionally, the first controlling sub-module 5031 is configured to:
when the visible area is a public path area where the AGV and the non-AGV object are in mixed traffic, determine a distance between the AGV currently driven to the public path area and the public path area; and
control the AGV of which the distance from the public path area is less than or equal to a safety distance to suspend driving until there is no non-AGV object in the public path area; and/or control a driving speed of the AGV of which the distance from the public path area is less than or equal to the safety distance to reduce to a reference speed until there is no non-AGV object in the public path area.

Optionally, the first controlling sub-module 5031 is configured to:
when the visible area is a device maintenance area included in the driving path of the AGV, determine a stay time length of the non-AGV object in the visible area, and control the AGV which is driven to the device maintenance area and of which the distance from the device maintenance area is less than or equal to the safety distance to forbid entering the device maintenance area; and/or,
when the stay time length of the non-AGV object in the device maintenance area is greater than or equal to a preset time length, control the AGV of which the driving path includes the device maintenance area to drive according to an alternate path until there is no non-AGV object in the device maintenance area.

Optionally, the third controlling sub-module 5033 is configured to:
acquire position information of the AGV currently in the working state;
determine an identifier of the AGV located outside the visible area and an identifier of the AGV located in the visible area based on the acquired position information; and
control the AGV located outside the visible area to forbid entering the visible area based on the determined identifiers, and control the AGV located in the visible area to stop moving.

Optionally, each AGV is posted with own identifier information.

The third controlling sub-module 5033 is configured to:
recognize the identifier of the AGV located in the visible area through the visual data; and
control the AGV located in the visible area to stop moving based on the recognized identifier, and control the remaining AGVs in the working state to forbid entering the visible area.

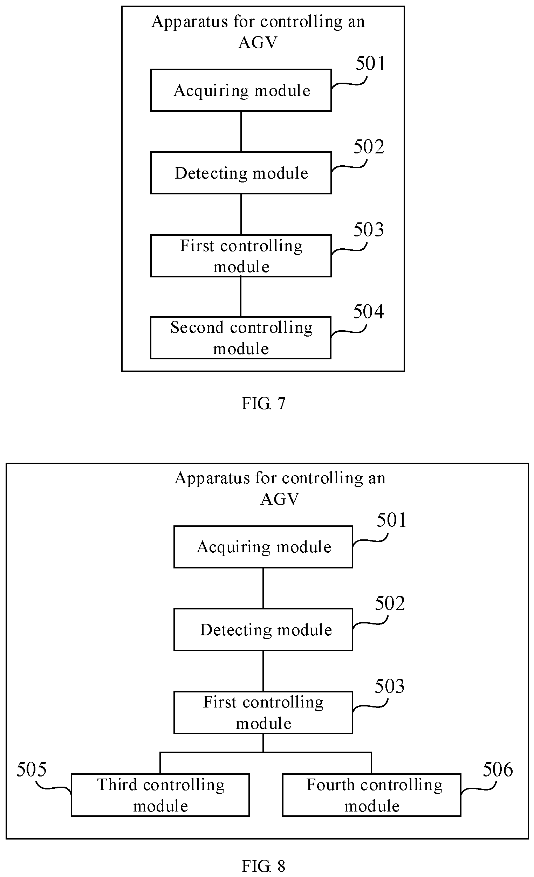

Optionally, referring to FIG. 7, the apparatus further includes:
a second controlling module 504 configured to control an indicator light in the visible area to be in a warning state to indicate that there is a moving object in the visible area.

Optionally, referring to FIG. 8, the apparatus further includes:
a third controlling module 505 configured to control a voice output device in the visible area to play a first voice prompt message when the moving object in the visible area includes the non-AGV object, so as to prompt the non-AGV object in the visible area to leave the visible area; and
a fourth controlling module 506 configured to control the voice output device in the visible area to play a second voice prompt message when the moving object in the visible area includes the AGV and does not include the non-AGV object to prompt the non-AGV object outside the visible area to forbid entering the visible area.

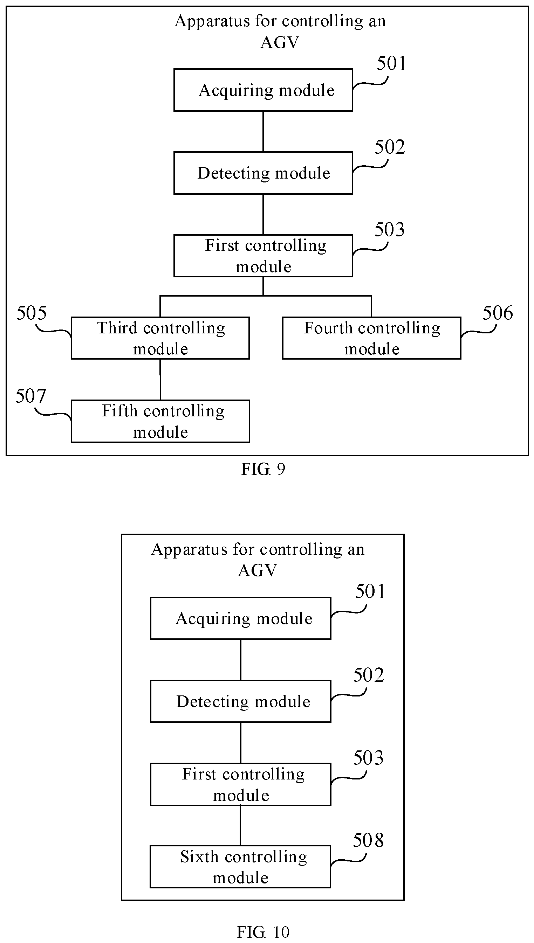

Optionally, referring to FIG. 9, the apparatus further includes:
a fifth controlling module 507 configured to control the voice output device in the visible area to stop playing the first voice prompt message when the visible area is the device maintenance area included in the driving path of the AGV and the stay time length of the non-AGV object in the device maintenance area is greater than the preset time length.

Optionally, referring to FIG. 10, the apparatus further includes:
a sixth controlling module 508 configured to control the AGV currently in the working state to drive according to the preset driving path when determining that there is no moving object in the visible area through detection.

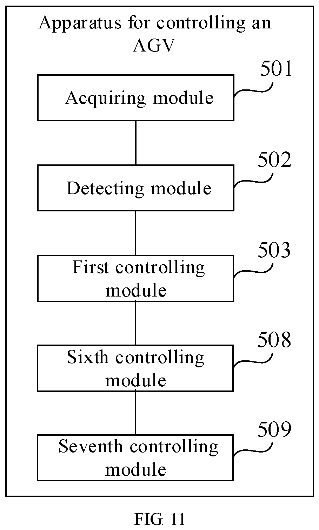

Optionally, referring to FIG. 11, the apparatus further includes:
a seventh controlling module 509 configured to control the indicator light in the visible area to be in a passing state to indicate that there is no moving object in the visible area.

In summary, in the embodiment of the present disclosure, the scheduling device may acquire visual data in the visible area collected by the target camera, and control the AGV currently in the working state when detecting that there is a moving object in the visible area of the target camera based on the visual data. Since the visible area of the target camera is a range where the target camera collects the visual data of the traffic management area on the driving path of the AGV, which means that the target camera is not a camera installed on the AGV in the working state in the workplace, thereby reducing the possibility that the visual data cannot be collected due to the blocking to the camera of the AGV, ensuring the management of the AGV that requires traffic management and reducing the occurrence of the collision accident of the AGV In addition, the number of the cameras disposed in the workplace is less than the number of the AGVs in the workplace, and all AGVs may be provided with the cameras, which means that the number of the cameras disposed in the workplace is less than the number of the cameras installed on the AGV, so that the quantity of the processed visual data is reduced, and operation resources are saved.

It should be noted that the apparatus for controlling an AGV provided by the above embodiment only takes division of all the functional modules as an example for explanation when controlling the AGV In actual application, the above functions may be finished by the different functional modules as required. That is, the internal structure of the apparatus is divided into different functional modules to finish all or part of the functions described above. In addition, the apparatus for controlling an AGV provided by the above embodiment has the same concept as the embodiment of the method for controlling an AGV The specific implementation process of the method may refer to the method embodiment, which will not be repeated herein.

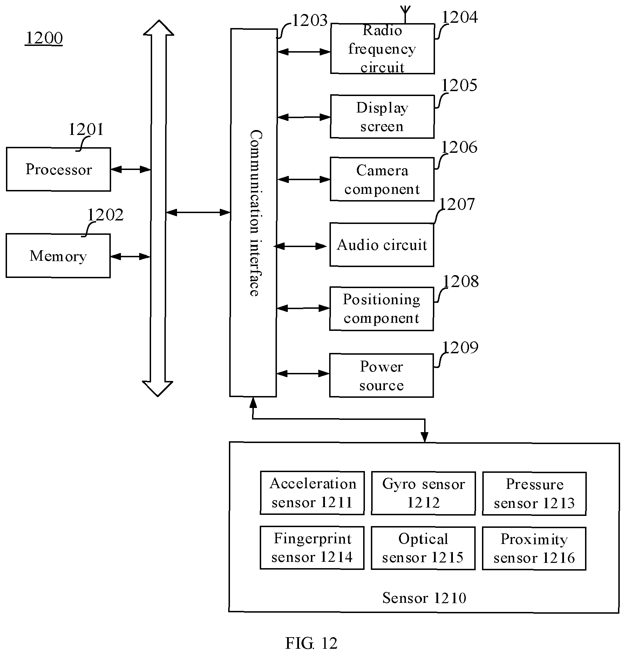

FIG. 12 is a structural block diagram of a scheduling device 1200 provided by one exemplary embodiment of the present disclosure. The scheduling device 1200 may be a smart phone, a tablet computer, a moving picture experts group audio layer III (MP3) player, a moving picture experts group audio layer IV (MP4) player, a laptop or desk computer. The scheduling device 1200 may also be called UE (User Equipment), a portable terminal, a laptop terminal, a desk terminal, etc.

Generally, the scheduling device 1200 includes a processor 1201 and a memory 1202.

The processor 1201 may include one or more processing cores, such as a 4-core processor and an 8-core processor. The processor 1201 may be formed by at least one hardware of a digital signal processing (DSP), a field-programmable gate array (FPGA), and a programmable logic array (PLA). The processor 1201 may also include a main processor and a coprocessor. The main processor is a processor for processing the data in an awake state, and is also called a central processing unit (CPU). The coprocessor is a low-power-consumption processor for processing the data in a standby state. In some embodiments, the processor 1201 may be integrated with a graphics processing unit (GPU), which is configured to render and draw the content that needs to be displayed by a display screen. In some embodiments, the processor 1201 may also include an artificial intelligence (Al) processor configured to process computational operations related to machine learning.

The memory 1202 may include one or more computer-readable storage mediums, which may be non-transitory. The memory 1202 may also include a high-speed random access memory, as well as a non-volatile memory, such as one or more disk storage devices and flash storage devices. In some embodiments, the non-transitory computer-readable storage medium in the memory 1202 is configured to store at least one instruction. The at least one instruction is configured to be executed by the processor 1201 to implement the method for controlling an AGV provided by the method embodiments of the present disclosure.

In some embodiments, the scheduling device 1200 also optionally includes a communication bus, a peripheral device interface 1203 and at least one peripheral device. The processor 1201, the memory 1202, and the peripheral device interface 1203 may be connected by a bus or a signal line. Each peripheral device may be connected to the peripheral device interface 1203 by a bus, a signal line or a circuit board. For example, the peripheral device includes at least one of a radio frequency circuit 1204, a touch display screen 1205, a camera 1206, an audio circuit 1207, a positioning component 1208 and a power source 1209.

The peripheral device interface 1203 may be configured to connect at least one peripheral device associated with an input/output (I/O) to the processor 1201 and the memory 1202. In some embodiments, the processor 1201, the memory 1202 and the peripheral device interface 1203 are integrated on the same chip or circuit board. In some other embodiments, any one or two of the processor 1201, the memory 1202 and the peripheral device interface 1203 may be implemented on a separate chip or circuit board, which is not limited in the present embodiment.

The radio frequency circuit 1204 is configured to receive and transmit a radio frequency (RF) signal, which is also referred to as an electromagnetic signal. The radio frequency circuit 1204 communicates with a communication network and other communication devices via the electromagnetic signal. The radio frequency circuit 1204 converts the electrical signal into the electromagnetic signal for transmission, or converts the received electromagnetic signal into the electrical signal. Optionally, the radio frequency circuit 1204 includes an antenna system, an RF transceiver, one or more amplifiers, a tuner, an oscillator, a digital signal processor, a codec chipset, a subscriber identity module card, and the like. The radio frequency circuit 1204 may communicate with other terminals via at least one wireless communication protocol. The wireless communication protocol includes, but not limited to, a metropolitan area network, various generations of mobile communication networks (2G, 3G, 4G, and 5G), a wireless local area network, and/or a wireless fidelity (WiFi) network. In some embodiments, the RF circuit 1204 may also include near field communication (NFC) related circuits, which is not limited in the present disclosure.

The display screen 1205 is configured to display a user interface (UI). The UI may include graphics, text, icons, videos, and any combination thereof. When the display screen 1205 is a touch display screen, the display screen 1205 also has the capacity to acquire touch signals on or over the surface of the display screen 1205. The touch signal may be input into the processor 1201 as a control signal for processing. At this time, the display screen 1205 may also be configured to provide virtual buttons and/or virtual keyboards, which are also referred to as soft buttons and/or soft keyboards. In some embodiments, the display screen 1205 may be one and may be disposed on the front panel of the scheduling device 1200. In some other embodiments, the display screens 1205 may be at least two and may be disposed respectively on different surfaces of the scheduling device 1200 or in a folded design. In further embodiments, the display screen 1205 may be a flexible display screen disposed on the curved or folded surface of the scheduling device 1200. Even the display screen 1205 may have an irregular shape other than a rectangle; that is, the display screen 1205 may be an irregular-shaped screen. The display screen 1205 may be a liquid crystal display (LCD) screen, an organic light-emitting diode (OLED) screen or the like.

The camera component 1206 is configured to capture images or videos. Optionally, the camera component 1206 includes a front camera and a rear camera. Usually, the front camera is placed on the front panel of the terminal, and the rear camera is placed on the back of the terminal. In some embodiments, at least two rear cameras are disposed, and are any one of a main camera, a depth-of-field camera, a wide-angle camera, and a telephoto camera respectively, so as to realize a background blurring function achieved by fusion of the main camera and the depth-of-field camera, panoramic shooting and virtual reality (VR) shooting functions achieved by fusion of the main camera and the wide-angle camera or other fusion shooting functions. In some embodiments, the camera component 1206 may also include a flashlight. The flashlight may be a mono-color temperature flashlight or a two-color temperature flashlight. The two-color temperature flash is a combination of a warm flashlight and a cold flashlight and can be used for light compensation at different color temperatures.

The audio circuit 1207 may include a microphone and a speaker. The microphone is configured to collect sound waves of users and environments, and convert the sound waves into electrical signals which are input into the processor 1201 for processing, or input into the RF circuit 1204 for voice communication. For the purpose of stereo acquisition or noise reduction, there may be a plurality of microphones respectively disposed at different locations of the scheduling device 1200. The microphone may also be an array microphone or an omnidirectional acquisition microphone. The speaker is then configured to convert the electrical signals from the processor 1201 or the radio frequency circuit 1204 into the sound waves. The speaker may be a conventional film speaker or a piezoelectric ceramic speaker. When the speaker is the piezoelectric ceramic speaker, the electrical signal may be converted into not only human-audible sound waves but also the sound waves which are inaudible to humans for the purpose of ranging and the like. In some embodiments, the audio circuit 1207 may also include a headphone jack.

The positioning component 1208 is configured to locate the current geographic location of the scheduling device 1200 to implement navigation or location-based service (LBS). The positioning component 1208 may be a positioning component based on the American Global Positioning System (GPS), the Chinese Beidou System, the Russian Glonass System or the European Union Galileo System.

The power source 1209 is configured to power up various components in the scheduling device 1200. The power source 1209 may be alternating current, direct current, a disposable battery, or a rechargeable battery. When the power source 1209 includes the rechargeable battery, the rechargeable battery may a wired rechargeable battery or a wireless rechargeable battery. The wired rechargeable battery is a battery charged by a cable line, and wireless rechargeable battery is charged by a wireless coil. The rechargeable battery may also support the fast charging technology.

In some embodiments, scheduling device 1200 also includes one or more sensors 1210. The one or more sensors 1210 include, but not limited to, an acceleration sensor 1211, a gyro sensor 1212, a pressure sensor 1213, a fingerprint sensor 1214, an optical sensor 1215 and a proximity sensor 1216.

The acceleration sensor 1211 may detect magnitudes of accelerations on three coordinate axes of a coordinate system established by the scheduling device 1200. For example, the acceleration sensor 1211 may be configured to detect components of a gravitational acceleration on the three coordinate axes. The processor 1201 may control the touch display screen 1205 to display a user interface in a landscape view or a portrait view according to a gravity acceleration signal collected by the acceleration sensor 1211. The acceleration sensor 1211 may also be configured to collect motion data of a game or a user.

The gyro sensor 1212 may detect a body direction and a rotation angle of the scheduling device 1200, and may cooperate with the acceleration sensor 1211 to collect a 3D motion of the user on the scheduling device 1200. Based on the data collected by the gyro sensor 1212, the processor 1201 may serve the following functions: motion sensing (such as changing the UI according to a user's tilt operation), image stabilization during shooting, game control and inertial navigation.

The pressure sensor 1213 may be disposed on a side frame of the scheduling device 1200 and/or a lower layer of the touch display screen 1205. When the pressure sensor 1213 is disposed on the side frame of the scheduling device 1200, a user's holding signal to the scheduling device 1200 may be detected. The processor 1201 may perform left-right hand recognition or quick operation according to the holding signal collected by the pressure sensor 1213. When the pressure sensor 1213 is disposed on the lower layer of the touch display screen 1205, the processor 1201 controls an operable control on the UI according to a user's pressure operation on the touch display screen 1205. The operable control includes at least one of a button control, a scroll bar control, an icon control and a menu control.

The fingerprint sensor 1214 is configured to collect a user's fingerprint. The processor 1201 identifies the user's identity based on the fingerprint collected by the fingerprint sensor 1214, or the fingerprint sensor 1214 identifies the user's identity based on the collected fingerprint. When the user's identity is identified as trusted, the processor 1201 authorizes the user to perform related sensitive operations, such as unlocking the screen, viewing encrypted information, downloading software, paying, and changing settings. The fingerprint sensor 1214 may be provided on the front, back, or side of the scheduling device 1200. When the scheduling device 1200 is provided with a physical button or a manufacturer's Logo, the fingerprint sensor 1214 may be integrated with the physical button or the manufacturer's Logo.

The optical sensor 1215 is configured to collect ambient light intensity. In one embodiment, the processor 1201 may control the display brightness of the touch display screen 1205 according to the ambient light intensity collected by the optical sensor 1215. For example, when the ambient light intensity is high, the display brightness of the touch display screen 1205 is increased; and when the ambient light intensity is low, the display brightness of the touch display screen 1205 is decreased. In another embodiment, the processor 1201 may also dynamically adjust shooting parameters of the camera component 1206 according to the ambient light intensity collected by the optical sensor 1215.

The proximity sensor 1216, also referred to as a distance sensor, is usually disposed on the front panel of the scheduling device 1200. The proximity sensor 1216 is configured to capture a distance between the user and a front surface of the scheduling device 1200. In one embodiment, when the proximity sensor 1216 detects that the distance between the user and the front surface of the scheduling device 1200 becomes gradually smaller, the processor 1201 controls the touch display screen 1205 to switch from a screen-on state to a screen-off state. When it is detected that the distance between the user and the front surface of the scheduling device 1200 gradually increases, the processor 1201 controls the touch display screen 1205 to switch from the screen-off state to the screen-on state.

That is, the embodiment of the present disclosure provides a scheduling device, including a processor and a memory for storing executable instructions of the processor. The processor is configured to execute the method in the embodiment shown in FIG. 3 or FIG. 4. In addition, the embodiment of the present disclosure also provides a computer-readable storage medium storing a computer program therein. The computer program, when being executed by the processor, may implement the method for controlling an AGV in the embodiment shown in FIG. 3 or FIG. 4.

It will be understood by those skilled in the art that the structure shown in FIG. 12 does not constitute a limitation to the scheduling device 1200, and may include more or less components than those illustrated, or combine some components or adopt different component arrangements.

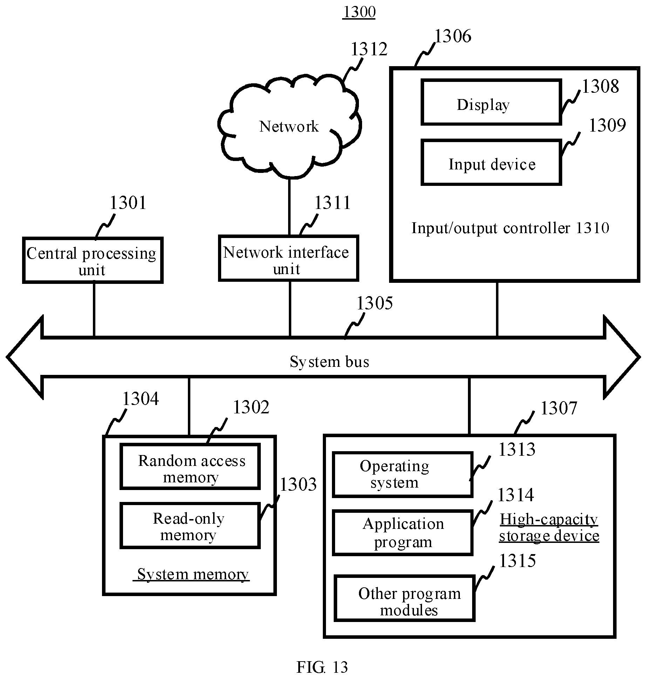

FIG. 13 is a schematic structural diagram of a scheduling device according to an embodiment of the present disclosure. The scheduling device may be a server in a background server cluster. Specifically,

The server 1300 includes a central processing unit (CPU) 1301, a system memory 1304 including a random-access memory (RAM) 1302 and a read-only memory (ROM) 1303, and a system bus 1305 connecting the system memory 1304 and the central processing unit 1301. The server 1300 further includes a basic input/output system (I/O system) 1306 which helps transport information between various components within a computer, and a high-capacity storage device 1307 for storing an operating system 1313, an application program 1314 and other program modules 1315.

The basic input/output system 1306 includes a display 1308 for displaying information and an input device 1309, such as a mouse and a keyboard, for inputting information by the user. Both the display 1308 and the input device 1309 are connected to the central processing unit 1301 through an input/output controller 1310 connected to the system bus 1305. The basic input/output system 1306 may also include the input/output controller 1310 for receiving and processing input from a plurality of other devices, such as the keyboard, the mouse, or an electronic stylus. Similarly, the input/output controller 1310 further provides output to the display, a printer or other types of output devices.

The high-capacity storage device 1307 is connected to the central processing unit 1301 through a high-capacity storage controller (not shown) connected to the system bus 1305. The high-capacity storage device 1307 and a computer-readable medium associated therewith provide non-volatile storage for the server 1300. That is, the high-capacity storage device 1307 may include the computer-readable medium (not shown), such as a hard disk or a CD-ROM driver.

Without loss of generality, the computer-readable medium may include a computer storage medium and a communication medium. The computer storage medium includes volatile and non-volatile, removable and non-removable media implemented in any method or technology for storage of information such as a computer-readable instruction, a data structure, a program module or other data. The computer storage medium includes an RAM, an ROM, an EPROM, an EEPROM, a flash memory or other solid-state storage technologies, a CD-ROM, DVD or other optical storage, a tape cartridge, a magnetic tape, a disk storage or other magnetic storage devices. Of course, it will be known by a person skilled in the art that the computer storage medium is not limited to above. The above system memory 1304 and the high-capacity storage device 1307 may be collectively referred to as the memory.

According to various embodiments of the present disclosure, the server 1300 may also be connected to a remote computer on a network through the network, such as the Internet, for operation. That is, the server 1300 may be connected to the network 1302 through a network interface unit 1311 connected to the system bus 1305, or may be connected to other types of networks or remote computer systems (not shown) with the network interface unit 1311.

The above memory further includes one or more programs which are stored in the memory, and configured to be executed by the CPU. The one or more programs contain an instruction to perform the method for controlling an AGV in the embodiment shown in FIG. 3 or FIG. 4.

It may be understood by an ordinary person skilled in the art that all or part of steps in the method for implementing the above embodiments may be completed by hardware or a program instructing relevant hardware. The program may be stored in a computer-readable storage medium, and the above storage medium may be an ROM, a magnetic disk, an optical disc or the like.

## Claims

1. A method for controlling a plurality of automated guided vehicles (AGV), comprising:
acquiring (301, 401) visual data in a visible area of a target camera installed in a workplace, wherein target camera collects the visual data of a traffic management area on a driving path of the AGVs in the visible area;
detecting (302, 402) whether there is a moving object in the visible area of the target camera based on the visual data; and
controlling (303, 403) AGVs currently in a working state, when detecting that there is a moving object in the visible area;
**characterized in that**,
controlling (303, 403) AGVs currently in the working state comprises:
controlling AGVs currently in the working state and located outside the visible area to forbid entering the visible area and controlling an AGV currently in the working state and located in the visible area to stop moving, when the moving object in the visible area comprises one AGV and a non-AGV object;
wherein controlling the AGVs currently in the working state and located outside the visible area to forbid entering the visible area, and controlling the AGV currently in the working state and located in the visible area to stop moving comprises:
acquiring position information of the AGVs currently in the working state;
determining identifiers of the AGVs located outside the visible area and an identifier of the AGV located in the visible area based on the acquired position information; and
controlling the AGVs located outside the visible area to forbid entering the visible area based on the determined identifier, and controlling the AGV located in the visible area to stop moving;
or,
wherein each AGV is posted with own identifier information; and
controlling the AGVs currently in the working state and located outside the visible area to forbid entering the visible area, and controlling the AGV currently in the working state and located in the visible area to stop moving comprises:
recognizing an identifier of the AGV located in the visible area through the visual data; and
controlling the AGV located in the visible area to stop moving based on the recognized identifier, and controlling remaining AGVs in the working state to forbid entering the visible area.

2. The method according to claim 1, wherein controlling (303, 403) AGVs currently in the working state comprises: controlling AGVs currently in the working state to forbid entering the visible area, when the moving object in the visible area comprises a non-AGV object and does not comprise an AGV;
controlling the AGVs currently in the working state to forbid entering the visible area comprises:
determining a distance between one of the AGVs currently driven to a public path area and the public path area, when the visible area is the public path area where the AGV and the non-AGV object are in mixed traffic; and
controlling the AGV of which a distance from the public path area is less than or equal to a safety distance to suspend driving until there is no non-AGV object in the public path area; and/or controlling a driving speed of the AGV of which the distance from the public path area is less than or equal to the safety distance to reduce to a reference speed until there is no non-AGV object in the public path area.

3. The method according to claim 1, wherein controlling (303, 403) AGVs currently in the working state comprises: controlling AGVs currently in the working state to forbid entering the visible area, when the moving object in the visible area comprises a non-AGV object and does not comprise an AGV;
controlling the AGVs currently in the working state to forbid entering the visible area comprises:
controlling one of the AGVs which is driven to a device maintenance area and of which a distance from the device maintenance area is less than or equal to a safety distance to forbid entering the device maintenance area, when the visible area is the device maintenance area comprised in the driving path of the AGV; and/or,
determining a stay time length of the non-AGV object in the device maintenance area, and controlling the AGV of which the driving path comprises the device maintenance area to drive along an alternate path until there is no non-AGV object in the device maintenance area, when the stay time length of the non-AGV object in the device maintenance area is greater than or equal to a preset time length.

4. The method according to any one of claims 1 to 3, wherein after detecting (303, 403) that there is a moving object in the visible area, the method further comprises:
controlling an indicator light in the visible area to be in a warning state to indicate that there is a moving object in the visible area.

5. The method according to claim 4, wherein after detecting (303, 403) that there is a moving object in the visible area, the method further comprises:
controlling a voice output device in the visible area to play a first voice prompt message to prompt the non-AGV object in the visible area to leave the visible area, when the moving object in the visible area comprises the non-AGV object; and
controlling the voice output device in the visible area to play a second voice prompt message to prompt the non-AGV object outside the visible area to forbid entering the visible area, when the moving object in the visible area comprises the AGV and does not comprise the non-AGV object.

6. The method according to claim 5, wherein after controlling the voice output device in the visible area to play the first voice prompt message, the method further comprises:
controlling the voice output device in the visible area to stop playing the first voice prompt message, when the visible area is the device maintenance area comprised in the driving path of the AGV and the stay time length of the non-AGV object in the device maintenance area is greater than the preset time length.

7. The method according to claim 1, wherein after detecting (302, 402) whether there is a moving object in the visible area of the target camera, the method further comprises:
controlling the AGVs currently in the working state to drive according to the preset driving path, when detecting that there is no moving object in the visible area.

8. The method according to claim 7, wherein after detecting that there is no moving object in the visible area, the method further comprises:
controlling an indicator light in the visible area to be in a passing state to indicate that there is no moving object in the visible area.

9. An apparatus for controlling a plurality of AGVs, comprising:
an acquiring module (501) configured to acquire visual data in a visible area of a target camera installed in a workplace, wherein the target camera collects the visual data of a traffic management area on a driving path of the AGVs in the visible area;
a detecting module (502) configured to detect whether there is a moving object in the visible area of the target camera based on the visual data; and
a first controlling module (503) configured to control AGVs currently in a working state, when detecting that there is a moving object in the visible area;
and **characterized in that**,
the first controlling module (503) further comprises:
a third controlling sub-module (5033) configured to control AGVs currently in the working state and located outside the visible area to forbid entering the visible area and control an AGV currently in the working state and located in the visible area to stop moving, when the moving object in the visible area comprises one AGV and a non-AGV obj ect;
wherein the third controlling sub-module (5033) is configured to:
acquire position information of the AGVs currently in the working state;
determine identifiers of the AGVs located outside the visible area and an identifier of the AGV located in the visible area based on the acquired position information; and
control the AGVs located outside the visible area to forbid entering the visible area based on the determined identifiers, and control the AGV located in the visible area to stop moving;
or,
wherein each AGV is posted with own identifier information; and
the third controlling sub-module (5033) is configured to:
recognize an identifier of the AGV located in the visible area through the visual data; and
control the AGV located in the visible area to stop moving based on the recognized identifier, and control remaining AGVs in the working state to forbid entering the visible area.

10. The apparatus according to claim 9, wherein the first controlling module (503) further comprises: a first controlling sub-module (5031) configured to control AGVs currently in the working state to forbid entering the visible area, when the moving object in the visible area comprises a non-AGV object and does not comprise an AGV; and the first controlling sub-module (5031) is configured to:
determine a distance between one of the AGVs currently driven to a public path area and the public path area, when the visible area is the public path area where the AGV and the non-AGV object are in mixed traffic; and
control the AGV of which a distance from the public path area is less than or equal to a safety distance to suspend driving until there is no non-AGV object in the public path area; and/or control a driving speed of the AGV of which the distance from the public path area is less than or equal to the safety distance to reduce to a reference speed until there is no non-AGV object in the public path area;wherein the first controlling sub-module (5031) is further configured to:
control one of the AGVs which is driven to a device maintenance area and of which a distance from the device maintenance area is less than or equal to a safety distance to forbid entering the device maintenance area, when the visible area is the device maintenance area comprised in the driving path of the AGV; and/or,
determine a stay time length of the non-AGV object in the device maintenance area, and control the AGV of which the driving path comprises the device maintenance area to drive along an alternate path until there is no non-AGV object in the device maintenance area, when the stay time length of the non-AGV object in the device maintenance area is greater than or equal to a preset time length;
wherein the apparatus further comprises:
a second controlling module (504) configured to control an indicator light in the visible area to be in a warning state to indicate that there is a moving object in the visible area;
wherein the apparatus further comprises:
a third controlling module (505) configured to control a voice output device in the visible area to play a first voice prompt message to prompt the non-AGV object in the visible area to leave the visible area, when the moving object in the visible area comprises the non-AGV object; and
a fourth controlling module (506) configured to control the voice output device in the visible area to play a second voice prompt message to prompt the non-AGV object outside the visible area to forbid entering the visible area, when the moving object in the visible area comprises the AGV and does not comprise the non-AGV obj ect;
wherein the apparatus further comprises:
a fifth controlling module (507) configured to control the voice output device in the visible area to stop playing the first voice prompt message, when the visible area is the device maintenance area comprised in the driving path of the AGV, and the stay time length of the non-AGV object in the device maintenance area is greater than the preset time length;
wherein the apparatus further comprises:
a sixth controlling module (508) configured to control the AGV currently in the working state to drive according to the preset driving path, when detecting that there is no moving object in the visible area; and
wherein the apparatus further comprises:
a seventh controlling module (509) configured to control the indicator light in the visible area to be in a passing state to indicate that there is no moving object in the visible area.

11. A system for controlling a plurality of AGVs, comprising a scheduling device (2), the AGVs (30) and a target camera;
wherein the scheduling device (2) comprises a processor (1201), a communication interface (1203), a memory (1202), and a communication bus;
the processor (1201), the communication interface (1203), and the memory (1202) communicate with one another through the communication bus;
the memory (1202) is configured to store a computer program; and
the processor (1201) is configured to execute the program stored in the memory (1202) to implement the steps of the method according to any one of claims 1 to 8; and
wherein the scheduling device (2) is configured to acquire visual data collected by the target camera, and detect whether there is a moving object in the visible area of the target camera based on the visual data; and control AGVs (3) currently in the working state when detecting that there is a moving object in the visible area; and
the AGVs (3) are located in the workplace and are configured to operate according to the control of the scheduling device (2) when being controlled by the scheduling device (2).

12. A computer-readable storage medium storing a computer program therein, wherein the computer program, when executed by a processor (1201), implements the steps of the method according to any one of claims 1 to 8.

## Patentansprüche

1. Verfahren zum Steuern einer Vielzahl von "Automated Guided Vehicles", AGV, umfassend:
Erfassen (301, 401) von visuellen Daten in einem Sichtbereich einer in einer Arbeitsumgebung installierten Zielkamera, wobei die Zielkamera die visuellen Daten eines Verkehrsmanagementbereichs auf einem Fahrweg der AGVs im Sichtbereich sammelt;
Erkennen (302, 402), auf der Grundlage der visuellen Daten, ob sich ein sich bewegendes Objekt im Sichtbereich der Zielkamera befindet; und
Steuern (303, 403) von AGVs, die sich derzeit in einem Arbeitszustand befinden, wenn ein sich bewegendes Objekt im Sichtbereich erkannt wird;
**dadurch gekennzeichnet, dass**
das Steuern (303, 403) von AGVs, die sich derzeit im Arbeitszustand befinden, umfasst:
Steuern von AGVs, die sich derzeit im Arbeitszustand befinden und sich außerhalb des Sichtbereichs befinden, zum Unterbinden des Einfahrens in den Sichtbereich, und Steuern eines AGV, das sich derzeit im Arbeitszustand befindet und sich im Sichtbereich befindet, zum Stoppen der Bewegung, wenn das sich bewegende Objekt im Sichtbereich ein AGV und ein Nicht-AGV-Objekt umfasst;
wobei das Steuern der AGVs, die sich derzeit im Arbeitszustand befinden und sich außerhalb des Sichtbereichs befinden, zum Unterbinden des Einfahrens in den Sichtbereich und das Steuern des AGV, das sich derzeit im Arbeitszustand befindet und sich im Sichtbereich befindet, zum Stoppen der Bewegung umfasst:
Erfassen von Positionsinformationen der AGVs, die sich derzeit im Arbeitszustand befinden;
Bestimmen von Identifikatoren der AGVs, die sich außerhalb des Sichtbereichs befinden, und eines Identifikators des AGV, das sich im Sichtbereich befindet, auf der Grundlage der erfassten Positionsinformationen; und
Steuern der AGVs, die sich außerhalb des Sichtbereichs befinden, zum Unterbinden des Einfahrens in den Sichtbereich auf der Grundlage des bestimmten Identifikators, und Steuern des AGV, das sich im Sichtbereich befindet, zum Stoppen der Bewegung;
oder,
wobei jedes AGV mit eigenen Identifizierungsinformationen versehen ist; und
das Steuern der AGVs, die sich derzeit im Arbeitszustand befinden und sich außerhalb des Sichtbereichs befinden, zum Unterbinden des Einfahrens in den Sichtbereich und das Steuern des AGV, das sich derzeit im Arbeitszustand befindet und sich im Sichtbereich befindet, zum Stoppen der Bewegung umfasst:
Erkennen eines Identifikators des im Sichtbereich befindlichen AGV anhand der visuellen Daten; und
Steuern des AGV, das sich im Sichtbereich befindet, zum Stoppen der Bewegung auf der Grundlage des erkannten Identifikators, und Steuern von verbleibenden AGVs im Arbeitszustand zum Unterbinden des Einfahrens in den Sichtbereich.

2. Verfahren nach Anspruch 1, wobei das Steuern (303, 403) von AGVs, die sich derzeit im Arbeitszustand befinden, umfasst:
Steuern von AGVs, die sich derzeit im Arbeitszustand befinden, zum Unterbinden des Einfahrens in den Sichtbereich, wenn das sich bewegende Objekt im Sichtbereich ein Nicht-AGV-Objekt umfasst und kein AGV umfasst;
wobei das Steuern der AGVs, die sich derzeit im Arbeitszustand befinden, zum Unterbinden des Einfahrens in den Sichtbereich umfasst:
Bestimmen eines Abstands zwischen einem der AGVs, das derzeit zu einem Bereich mit öffentlichen Wegen gefahren wird, und dem Bereich mit öffentlichen Wegen, wenn der Sichtbereich der Bereich mit öffentlichen Wegen ist, in dem das AGV und das Nicht-AGV-Objekt im Mischverkehr sind; und
Steuern des AGV, dessen Abstand zum Bereich mit öffentlichen Wegen kleiner oder gleich einem Sicherheitsabstand ist, zum Unterbrechen des Fahrens, bis sich kein Nicht-AGV-Objekt im Bereich mit öffentlichen Wegen befindet; und/oder
Steuern einer Fahrgeschwindigkeit des AGV, dessen Abstand zum Bereich mit öffentlichen Wegen kleiner oder gleich dem Sicherheitsabstand ist, zum Reduzieren auf eine Referenzgeschwindigkeit, bis sich kein Nicht-AGV-Objekt im Bereich mit öffentlichen Wegen befindet.

3. Verfahren nach Anspruch 1, wobei das Steuern (303, 403) von AGVs, die sich derzeit im Arbeitszustand befinden, umfasst: Steuern von AGVs, die sich derzeit im Arbeitszustand befinden, zum Unterbinden des Einfahrens in den Sichtbereich, wenn das sich bewegende Objekt im Sichtbereich ein Nicht-AGV-Objekt umfasst und kein AGV umfasst;
wobei das Steuern der AGVs, die sich derzeit im Arbeitszustand befinden, zum Unterbinden des Einfahrens in den Sichtbereich umfasst:
Steuern eines der AGVs, das zu einem Gerätewartungsbereich gefahren wird und dessen Abstand zum Gerätewartungsbereich kleiner oder gleich einem Sicherheitsabstand ist, zum Unterbinden des Einfahrens in den Gerätewartungsbereich, wenn der Sichtbereich der Gerätewartungsbereich ist, der im Fahrweg des AGV liegt; und/oder,
Bestimmen einer Verweildauer des Nicht-AGV-Objekts im Gerätewartungsbereich und Steuern des AGV, dessen Fahrweg den Gerätewartungsbereich umfasst, zum Fahren entlang eines alternativen Weges, bis sich kein Nicht-AGV-Objekt im Gerätewartungsbereich befindet, wenn die Verweildauer des Nicht-AGV-Objekts im Gerätewartungsbereich größer oder gleich einer voreingestellten Zeitdauer ist.

4. Verfahren nach einem der Ansprüche 1 bis 3, wobei nach dem Erkennen (303, 403), dass sich ein sich bewegendes Objekt im Sichtbereich befindet, das Verfahren ferner umfasst:
Steuern einer Anzeigeleuchte im Sichtbereich zu einem Warnzustand, um anzuzeigen, dass sich ein sich bewegendes Objekt im Sichtbereich befindet.

5. Verfahren nach Anspruch 4, wobei das Verfahren nach dem Erkennen (303, 403), dass sich ein sich bewegendes Objekt im Sichtbereich befindet, ferner umfasst:
Steuern einer Sprachausgabevorrichtung im Sichtbereich zum Ausgeben einer ersten Sprachaufforderungsnachricht zum Auffordern des Nicht-AGV-Objekts im Sichtbereich, den Sichtbereich zu verlassen, wenn das sich bewegende Objekt im Sichtbereich das Nicht-AGV-Objekt umfasst; und
Steuern der Sprachausgabevorrichtung im Sichtbereich zum Ausgeben einer zweiten Sprachaufforderungsnachricht zum Auffordern des Nicht-AGV-Objekts außerhalb des Sichtbereichs, das Eintreten in den Sichtbereich zu unterbinden, wenn das sich bewegende Objekt im Sichtbereich das AGV umfasst und nicht das Nicht-AGV-Objekt umfasst.

6. Verfahren nach Anspruch 5, wobei das Verfahren nach dem Steuern der Sprachausgabevorrichtung im Sichtbereich zum Ausgeben der ersten Sprachaufforderungsnachricht ferner umfasst:
Steuern der Sprachausgabevorrichtung im Sichtbereich zum Stoppen des Ausgebens der ersten Sprachaufforderungsnachricht, wenn der Sichtbereich der Gerätewartungsbereich ist, der im Fahrweg des AGV liegt, und die Verweildauer des Nicht-AGV-Objekts im Gerätewartungsbereich größer ist als die voreingestellte Zeitdauer.

7. Verfahren nach Anspruch 1, wobei das Verfahren nach dem Erkennen (302, 402), ob sich ein sich bewegendes Objekt im Sichtbereich der Zielkamera befindet, ferner umfasst:
Steuern der AGVs, die sich im Arbeitszustand befinden, zum Fahren gemäß dem voreingestellten Fahrweg, wenn erkannt wird, dass sich kein sich bewegendes Objekt im Sichtbereich befindet.

8. Verfahren nach Anspruch 7, wobei nach dem Erkennen, dass sich kein sich bewegendes Objekt im Sichtbereich befindet, das Verfahren ferner umfasst:
Steuern einer Anzeigeleuchte im Sichtbereich zu einem Durchlasszustand, um anzuzeigen, dass sich kein sich bewegendes Objekt im Sichtbereich befindet.

9. Vorrichtung zum Steuern einer Vielzahl von AGVs, umfassend:
ein Erfassungsmodul (501), das dafür ausgelegt ist, visuelle Daten in einem Sichtbereich einer in einer Arbeitsumgebung installierten Zielkamera zu erfassen, wobei die Zielkamera die visuellen Daten eines Verkehrsmanagementbereichs auf einem Fahrweg der AGVs im Sichtbereich sammelt;
ein Erkennungsmodul (502), das dafür ausgelegt ist, zu erkennen, auf der Grundlage der visuellen Daten, ob sich ein sich bewegendes Objekt im Sichtbereich der Zielkamera befindet; und
ein erstes Steuerungsmodul (503), das dafür ausgelegt ist, AGVs zu steuern, die sich derzeit in einem Arbeitszustand befinden, wenn erkannt wird, dass sich ein sich bewegendes Objekt im Sichtbereich befindet;
und **dadurch gekennzeichnet, dass**
das erste Steuerungsmodul (503) ferner umfasst:
ein drittes Steuerungsteilmodul (5033), das dafür ausgelegt ist, AGVs zu steuern, die sich derzeit im Arbeitszustand befinden und sich außerhalb des Sichtbereichs befinden, zum Unterbinden des Einfahrens in den Sichtbereich, und ein AGV zu steuern, das sich derzeit im Arbeitszustand befindet und sich im Sichtbereich befindet, zum Stoppen der Bewegung, wenn das sich bewegende Objekt im Sichtbereich ein AGV und ein Nicht-AGV-Objekt umfasst;
wobei das dritte Steuerungsteilmodul (5033) für folgende Vorgänge ausgelegt ist:
Erfassen von Positionsinformationen der AGVs, die sich derzeit im Arbeitszustand befinden;
Bestimmen von Identifikatoren der AGVs, die sich außerhalb des Sichtbereichs befinden, und eines Identifikators des AGV, das sich im Sichtbereich befindet, auf der Grundlage der erfassten Positionsinformationen; und
Steuern der AGVs, die sich außerhalb des Sichtbereichs befinden, zum Unterbinden des Einfahrens in den Sichtbereich auf der Grundlage der bestimmten Identifikatoren, und Steuern des AGV, das sich im Sichtbereich befindet, zum Stoppen der Bewegung;
oder,
wobei jedes AGV mit eigenen Identifizierungsinformationen versehen ist; und
das dritte Steuerungsteilmodul (5033) für folgende Vorgänge ausgelegt ist:
Erkennen eines Identifikators des im Sichtbereich befindlichen AGV anhand der visuellen Daten; und
Steuern des AGV, das sich im Sichtbereich befindet, zum Stoppen der Bewegung auf der Grundlage des erkannten Identifikators, und Steuern von verbleibenden AGVs im Arbeitszustand zum Unterbinden des Einfahrens in den Sichtbereich.

10. Vorrichtung nach Anspruch 9, wobei das erste Steuerungsmodul (503) ferner umfasst:
ein erstes Steuerungsteilmodul (5031), das dafür ausgelegt ist, AGVs, die sich derzeit im Arbeitszustand befinden, zum Unterbinden des Einfahrens in den Sichtbereich zu steuern, wenn das sich bewegende Objekt im Sichtbereich ein Nicht-AGV-Objekt umfasst und kein AGV umfasst; und
das erste Steuerungsteilmodul (5031) für folgende Vorgänge ausgelegt ist:
Bestimmen eines Abstands zwischen einem der AGVs, das derzeit zu einem Bereich mit öffentlichen Wegen gefahren wird, und dem Bereich mit öffentlichen Wegen, wenn der Sichtbereich der Bereich mit öffentlichen Wegen ist, in dem das AGV und das Nicht-AGV-Objekt im Mischverkehr sind; und
Steuern des AGV, dessen Abstand zum Bereich mit öffentlichen Wegen kleiner oder gleich einem Sicherheitsabstand ist, zum Unterbrechen des Fahrens, bis sich kein Nicht-AGV-Objekt im Bereich mit öffentlichen Wegen befindet; und/oder
Steuern einer Fahrgeschwindigkeit des AGV, dessen Abstand zum Bereich mit öffentlichen Wegen kleiner oder gleich dem Sicherheitsabstand ist, zum Reduzieren auf eine Referenzgeschwindigkeit, bis sich kein Nicht-AGV-Objekt im Bereich mit öffentlichen Wegen befindet;
wobei das erste Steuerungsteilmodul (5031) ferner für folgende Vorgänge ausgelegt ist:
Steuern eines der AGVs, das zu einem Gerätewartungsbereich gefahren wird und dessen Abstand zum Gerätewartungsbereich kleiner oder gleich einem Sicherheitsabstand ist, zum Unterbinden des Einfahrens in den Gerätewartungsbereich, wenn der Sichtbereich der Gerätewartungsbereich ist, der im Fahrweg des AGV liegt; und/oder,
Bestimmen einer Verweildauer des Nicht-AGV-Objekts im Gerätewartungsbereich und Steuern des AGV, dessen Fahrweg den Gerätewartungsbereich umfasst, zum Fahren entlang eines alternativen Weges, bis sich kein Nicht-AGV-Objekt im Gerätewartungsbereich befindet, wenn die Verweildauer des Nicht-AGV-Objekts im Gerätewartungsbereich größer oder gleich einer voreingestellten Zeitdauer ist;
wobei die Vorrichtung ferner umfasst:
ein zweites Steuerungsmodul (504), das dafür ausgelegt ist, eine Anzeigeleuchte im Sichtbereich zu einem Warnzustand zu steuern, um anzuzeigen, dass sich ein sich bewegendes Objekt im Sichtbereich befindet;
wobei die Vorrichtung ferner umfasst:
ein drittes Steuerungsmodul (505), das dafür ausgelegt ist, eine Sprachausgabevorrichtung im Sichtbereich zum Ausgeben einer ersten Sprachaufforderungsnachricht zum Auffordern des Nicht-AGV-Objekts im Sichtbereich, den Sichtbereich zu verlassen, zu steuern, wenn das sich bewegende Objekt im Sichtbereich das Nicht-AGV-Objekt umfasst; und
ein viertes Steuerungsmodul (506), das dafür ausgelegt ist, die Sprachausgabevorrichtung im Sichtbereich zum Ausgeben einer zweiten Sprachaufforderungsnachricht zum Auffordern des Nicht-AGV-Objekts außerhalb des Sichtbereichs, das Eintreten in den Sichtbereich zu unterbinden, zu steuern, wenn das sich bewegende Objekt im Sichtbereich das AGV umfasst und das Nicht-AGV-Objekt nicht umfasst;
wobei die Vorrichtung ferner umfasst:
ein fünftes Steuerungsmodul (507), das dafür ausgelegt ist, die Sprachausgabevorrichtung im Sichtbereich zum Stoppen des Ausgebens der ersten Sprachaufforderungsnachricht zu steuern, wenn der Sichtbereich der Gerätewartungsbereich ist, der im Fahrweg des AGV liegt, und die Verweildauer des Nicht-AGV-Objekts im Gerätewartungsbereich größer ist als die voreingestellte Zeitdauer;
wobei die Vorrichtung ferner umfasst:
ein sechstes Steuerungsmodul (508), dafür ausgelegt ist, die AGVs, die sich derzeit im Arbeitszustand befinden, zum Fahren gemäß dem voreingestellten Fahrweg zu steuern, wenn erkannt wird, dass sich kein sich bewegendes Objekt im Sichtbereich befindet; und
wobei die Vorrichtung ferner umfasst:
ein siebtes Steuerungsmodul (509), dafür ausgelegt ist, eine Anzeigeleuchte im Sichtbereich zu einem Durchlasszustand zu steuern, um anzuzeigen, dass sich kein sich bewegendes Objekt im Sichtbereich befindet.

11. System zum Steuern einer Vielzahl von AGVs, umfassend eine Planungsvorrichtung (2), die AGVs (30) und eine Zielkamera;
wobei die Planungsvorrichtung (2) einen Prozessor (1201), eine Kommunikationsschnittstelle (1203), einen Speicher (1202) und einen Kommunikationsbus umfasst;
der Prozessor (1201), die Kommunikationsschnittstelle (1203) und der Speicher (1202) über den Kommunikationsbus miteinander kommunizieren;
der Speicher (1202) dafür ausgelegt ist, ein Computerprogramm zu speichern; und
der Prozessor (1201) dafür ausgelegt ist, das im Speicher (1202) gespeicherte Programm zum Implementieren der Schritte des Verfahrens nach einem der Ansprüche 1 bis 8 auszuführen; und
wobei die Planungsvorrichtung (2) dafür ausgelegt ist, von der Zielkamera gesammelte visuelle Daten zu erfassen und auf der Grundlage der visuellen Daten zu erkennen, ob sich ein sich bewegendes Objekt im Sichtbereich der Zielkamera befindet; und AGVs (3) zu steuern, die sich derzeit im Arbeitszustand befinden, wenn erkannt wird, dass sich ein sich bewegendes Objekt im Sichtbereich befindet; und
die AGVs (3) sich in der Arbeitsumgebung befinden und für den Betrieb gemäß der Steuerung der Planungsvorrichtung (2) ausgelegt sind, wenn sie von der Planungsvorrichtung (2) gesteuert werden.

12. Computerlesbares Speichermedium, auf dem ein Computerprogramm gespeichert ist, wobei das Computerprogramm bei seiner Ausführung durch einen Prozessor (1201) die Schritte des Verfahrens nach einem der Ansprüche 1 bis 8 implementiert.

## Revendications

1. Procédé de commande d'une pluralité de véhicules à guidage automatique (VGA), comprenant :
l'acquisition (301, 401) de données visuelles dans une zone visible d'une caméra cible installée sur un lieu de travail, la caméra cible collectant les données visuelles d'une zone de gestion de trafic sur une trajectoire de conduite des VGA dans la zone visible ;
la détection (302, 402) du fait qu'il y a un objet mobile dans la zone visible de la caméra cible en fonction des données visuelles ; et
la commande (303, 403) de VGA actuellement en état de fonctionnement, lorsqu'il est détecté qu'il y a un objet mobile dans la zone visible ;
**caractérisé en ce que**
la commande (303, 403) de VGA actuellement en état de fonctionnement comprend :
la commande de VGA actuellement en état de fonctionnement et situés en dehors de la zone visible afin de les empêcher d'entrer dans la zone visible et la commande d'un VGA actuellement en état de fonctionnement et situé dans la zone visible afin qu'il arrête de se déplacer, lorsque l'objet mobile dans la zone visible comprend un seul VGA et un objet non-VGA ;
la commande de VGA actuellement en état de fonctionnement et situés en dehors de la zone visible afin de les empêcher d'entrer dans la zone visible et la commande d'un VGA actuellement en état de fonctionnement et situé dans la zone visible afin qu'il arrête de se déplacer comprenant :
l'acquisition d'informations de position concernant les VGA actuellement en état de fonctionnement ;
la détermination d'identifiants des VGA situés en dehors de la zone visible et d'un identifiant du VGA situé dans la zone visible en fonction des informations de position acquises ; et
la commande des VGA situés en dehors de la zone visible afin de les empêcher d'entrer dans la zone visible en fonction de l'identifiant déterminé, et la commande du VGA situé dans la zone visible afin qu'il arrête de se déplacer ;
ou,
chaque VGA étant doté de ses propres informations d'identification ; et
la commande de VGA actuellement en état de fonctionnement et situés en dehors de la zone visible afin de les empêcher d'entrer dans la zone visible et la commande d'un VGA actuellement en état de fonctionnement et situé dans la zone visible afin qu'il arrête de se déplacer comprenant :
la reconnaissance d'un identifiant du VGA situé dans la zone visible par l'intermédiaire des données visuelles ; et
la commande du VGA situé dans la zone visible afin qu'il arrête de se déplacer en fonction de l'identifiant reconnu, et la commande des VGA restants en état de fonctionnement afin de les empêcher d'entrer dans la zone visible.

2. Procédé selon la revendication 1, dans lequel la commande (303, 403) de VGA actuellement en état de fonctionnement comprend : la commande de VGA actuellement en état de fonctionnement afin de les empêcher d'entrer dans la zone visible, lorsque l'objet mobile dans la zone visible comprend un objet non-VGA et ne comprend pas de VGA ;
la commande des VGA actuellement en état de fonctionnement afin de les empêcher d'entrer dans la zone visible comprenant :
la détermination d'une distance entre l'un des VGA actuellement conduits vers une zone de voie publique et la zone de voie publique, la zone visible étant la zone de voie publique dans laquelle le VGA et l'objet non-VGA se trouvent dans un trafic mixte ; et
la commande du VGA dont une distance par rapport à la zone de voie publique est inférieure ou égale à une distance de sécurité afin qu'il suspende sa conduite jusqu'à ce qu'il n'y ait plus aucun objet non-VGA dans la zone de voie publique ; et/ou la commande d'une vitesse de conduite du VGA dont la distance par rapport à la zone de voie publique est inférieure ou égale à la distance de sécurité de façon à la réduire à une vitesse de référence jusqu'à qu'il n'y ait plus aucun objet non-VGA dans la zone de voie publique.

3. Procédé selon la revendication 1, dans lequel la commande (303, 403) de VGA actuellement en état de fonctionnement comprend : la commande de VGA actuellement en état de fonctionnement de façon à les empêcher d'entrer dans la zone visible, lorsque l'objet mobile dans la zone visible comprend un objet non-VGA et ne comprend pas de VGA ;
la commande des VGA actuellement en état de fonctionnement afin de les empêcher d'entrer dans la zone visible comprenant :
la commande de l'un des VGA qui est conduit vers une zone de maintenance de dispositif et dont une distance par rapport à la zone de maintenance de dispositif est inférieure ou égale à une distance de sécurité afin de l'empêcher d'entrer dans la zone de maintenance de dispositif, lorsque la zone visible est la zone de maintenance de dispositif incluse sur la trajectoire de conduite du VGA ; et/ou
la détermination d'une durée de séjour de l'objet non-VGA dans la zone de maintenance de dispositif, et la commande du VGA dont la trajectoire de conduite comprend la zone de maintenance de dispositif afin qu'il conduise le long d'une trajectoire alternative jusqu'à ce qu'il n'y ait plus aucun objet non-VGA dans la zone de maintenance de dispositif, lorsque la durée de séjour de l'objet non-VGA dans la zone de maintenance de dispositif est supérieure ou égale à une durée prédéfinie.

4. Procédé selon l'une quelconque des revendications 1 à 3, dans lequel, après la détection (303, 403) du fait qu'il y a un objet mobile dans la zone visible, le procédé comprend en outre :
la commande d'un témoin lumineux dans la zone visible afin qu'il passe dans un état d'avertissement pour indiquer qu'il y a un objet mobile dans la zone visible.

5. Procédé selon la revendication 4, dans lequel, après la détection (303, 403) du fait qu'il y a un objet mobile dans la zone visible, le procédé comprend en outre :
la commande d'un dispositif de sortie vocale dans la zone visible afin qu'il joue un premier message de demande vocale pour demander à l'objet non-VGA situé dans la zone visible de quitter la zone visible, lorsque l'objet mobile dans la zone visible comprend l'objet non-VGA ; et
la commande du dispositif de sortie vocale dans la zone visible afin qu'il joue un deuxième message de demande vocale pour demander à l'objet non-VGA situé en dehors de la zone visible de ne pas entrer dans la zone visible, lorsque l'objet mobile dans la zone visible comprend le VGA et ne comprend pas l'objet non-VGA.

6. Procédé selon la revendication 5, dans lequel, après la commande du dispositif de sortie vocale dans la zone visible afin qu'il joue le premier message de demande vocale, le procédé comprend en outre :
la commande du dispositif de sortie vocale dans la zone visible afin qu'il arrête de jouer le premier message de demande vocale, lorsque la zone visible est la zone de maintenance de dispositif incluse sur la trajectoire de conduite du VGA et que la durée de séjour de l'objet non-VGA dans la zone de maintenance de dispositif est plus longue que la durée prédéfinie.

7. Procédé selon la revendication 1, dans lequel, après la détection (302, 402) du fait qu'il y a un objet mobile dans la zone visible de la caméra cible, le procédé comprend en outre : la commande des VGA actuellement en état de fonctionnement afin qu'ils conduisent selon la trajectoire de conduite prédéfinie, lorsqu'il est détecté qu'il n'y a plus aucun objet mobile dans la zone visible.

8. Procédé selon la revendication 7, dans lequel, après la détection du fait qu'il y a plus aucun objet mobile dans la zone visible, le procédé comprend en outre :
la commande d'un témoin lumineux dans la zone visible afin qu'il passe dans un état de passage pour indiquer qu'il n'y a plus aucun objet mobile dans la zone visible.

9. Appareil pour commander une pluralité de VGA, comprenant :
un module d'acquisition (501) configuré pour acquérir des données visuelles dans une zone visible d'une caméra cible installée sur un lieu de travail, la caméra cible collectant les données visuelles d'une zone de gestion de trafic sur une trajectoire de conduite des VGA dans la zone visible ;
un module de détection (502) configuré pour détecter s'il y a ou non un objet mobile dans la zone visible de la caméra cible en fonction des données visuelles ; et
un premier module de commande (503) configuré pour commander des VGA actuellement en état de fonctionnement, lorsqu'il est détecté qu'il y a un objet mobile dans la zone visible ;
et **caractérisé en ce que**
le premier module de commande (503) comprend en outre :
un troisième sous-module de commande (5033) configuré pour commander des VGA actuellement en état de fonctionnement et situés en dehors de la zone visible afin de les empêcher d'entrer dans la zone visible et commander un VGA actuellement en état de fonctionnement et situé dans la zone visible afin qu'il arrête de se déplacer, lorsque l'objet mobile dans la zone visible comprend un seul VGA et un objet non-VGA ;
le troisième sous-module de commande (5033) étant configuré pour :
acquérir des informations de position concernant les VGA actuellement en état de fonctionnement ;
déterminer des identifiants des VGA situés en dehors de la zone visible et un identifiant du VGA situé dans la zone visible en fonction des informations de position acquises ; et
la commande des VGA situés en dehors de la zone visible afin de les empêcher d'entrer dans la zone visible en fonction des identifiants déterminés, et la commande du VGA situé dans la zone visible afin qu'il arrête de se déplacer ;
ou,
chaque VGA étant doté de ses propres informations d'identification ; et
le troisième sous-module de commande (5033) étant configuré pour :
reconnaitre un identifiant du VGA situé dans la zone visible par l'intermédiaire des données visuelles ; et
commander le VGA situé dans la zone visible afin qu'il arrête de se déplacer en fonction de l'identifiant reconnu, et commander les VGA restants en état de fonctionnement afin de les empêcher d'entrer dans la zone visible.

10. Procédé selon la revendication 9, dans lequel le premier module de commande (503) comprend en outre : un premier sous-module de commande (5031) configuré pour commander des VGA actuellement en état de fonctionnement afin de les empêcher d'entrer dans la zone visible, lorsque l'objet mobile dans la zone visible comprend un objet non-VGA et ne comprend pas de VGA ; et le premier sous-module de commande (5031) est configuré pour :
déterminer une distance entre l'un des VGA actuellement conduits vers une zone de voie publique et la zone de voie publique, la zone visible étant la zone de voie publique dans laquelle le VGA et l'objet non-VGA se trouvent dans un trafic mixte ; et
commander le VGA dont une distance par rapport à la zone de voie publique est inférieure ou égale à une distance de sécurité afin qu'il suspende sa conduite jusqu'à ce qu'il n'y ait plus aucun objet non-VGA dans la zone de voie publique ; et/ou commander une vitesse de conduite du VGA dont la distance par rapport à la zone de voie publique est inférieure ou égale à la distance de sécurité de façon à la réduire à une vitesse de référence jusqu'à qu'il n'y a plus aucun objet non-VGA dans la zone de voie publique ; le premier sous-module de commande (5031) étant en outre configuré pour :
commander l'un des VGA qui est conduit vers une zone de maintenance de dispositif et dont une distance par rapport à la zone de maintenance de dispositif est inférieure ou égale à une distance de sécurité afin de l'empêcher d'entrer dans la zone de maintenance de dispositif, lorsque la zone visible est la zone de maintenance de dispositif incluse sur la trajectoire de conduite du VGA ; et/ou
déterminer une durée de séjour de l'objet non-VGA dans la zone de maintenance de dispositif, et commander le VGA dont la trajectoire de conduite comprend la zone de maintenance de dispositif afin qu'il conduise le long d'une trajectoire alternative jusqu'à ce qu'il n'y ait plus aucun objet non-VGA dans la zone de maintenance de dispositif, lorsque la durée de séjour de l'objet non-VGA dans la zone de maintenance de dispositif est supérieure ou égale à une durée prédéfinie ; l'appareil comprenant en outre :
un deuxième module de commande (504) configuré pour commander un témoin lumineux dans la zone visible afin qu'il passe dans un état d'avertissement pour indiquer qu'il y a un objet mobile dans la zone visible ;
l'appareil comprenant en outre :
un troisième module de commande (505) configuré pour commander un dispositif de sortie vocale dans la zone visible de façon qu'il joue un premier message de demande vocale pour demander à l'objet non-VGA situé dans la zone visible de quitter la zone visible, lorsque l'objet mobile dans la zone visible comprend l'objet non-VGA ; et
un quatrième module de commande (506) configuré pour commander le dispositif de sortie vocale dans la zone visible de façon qu'il joue un deuxième message de demande vocale pour demander à l'objet non-VGA situé en dehors de la zone visible de ne pas entrer dans la zone visible, lorsque l'objet mobile dans la zone visible comprend le VGA et ne comprend pas l'objet non-VGA ;
l'appareil comprenant en outre :
un cinquième module de commande (507) configuré pour commander le dispositif de sortie vocale dans la zone visible de façon qu'il arrête de jouer le premier message de demande vocale, lorsque la zone visible est la zone de maintenance de dispositif incluse sur la trajectoire de conduite du VGA, et que la durée de séjour de l'objet non-VGA dans la zone de maintenance de dispositif est plus longue que la durée prédéfinie ; l'appareil comprenant en outre :
un sixième module de commande (508) configuré pour commander le VGA actuellement en état de fonctionnement de façon qu'il conduise selon la trajectoire de conduite prédéfinie, lorsqu'il est détecté qu'il n'y a plus aucun objet mobile dans la zone visible ; et
l'appareil comprenant en outre :
un septième module de commande (509) configuré pour commander le témoin lumineux dans la zone visible de façon qu'il passe dans un état de passage pour indiquer qu'il n'y a pas d'objet mobile dans la zone visible.

11. Système pour commander une pluralité de VGA, comprenant un dispositif d'ordonnancement (2), les VGA (30) et une caméra cible ;
le dispositif d'ordonnancement (2) comprenant un processeur (1201), une interface de communication (1203), une mémoire (1202), et un bus de communication ;
le processeur (1201), l'interface de communication (1203), et la mémoire (1202) communiquant entre eux via le bus de communication ;
la mémoire (1202) étant configurée pour stocker un programme informatique ; et
le processeur (1201) étant configuré pour exécuter le programme stocké dans la mémoire (1202) pour la mise en œuvre des étapes du procédé selon l'une quelconque des revendications 1 à 8 ; et
le dispositif d'ordonnancement (2) étant configuré pour acquérir des données visuelles collectées par la caméra cible, et détecter s'il y a un objet mobile dans la zone visible de la caméra cible en fonction des données visuelles ; et commander les VGA (3) actuellement en état de fonctionnement lorsqu'il est détecté qu'il y a un objet mobile dans la zone visible ; et
les VGA (3) étant situés sur le lieu de travail et étant configurés pour fonctionner selon la commande du dispositif d'ordonnancement (2) lorsqu'ils sont commandés par le dispositif d'ordonnancement (2).

12. Support de stockage lisible par ordinateur stockant un programme informatique, lequel programme informatique, lorsqu'il est exécuté par un processeur (1201), mettant en œuvre les étapes du procédé selon l'une quelconque des revendications 1 à 8.
